(19) Europäisches Patentamt
European Patent Office
Office européen des brevets

(11) Veröffentlichungsnummer : **0 087 706**
**B1**

(12) # EUROPÄISCHE PATENTSCHRIFT

(45) Veröffentlichungstag der Patentschrift : **30.07.86**

(51) Int. Cl.[4] : **C 09 B 26/04**, D 21 H 1/46, D 21 H 3/80, D 06 P 1/41

(21) Anmeldenummer : **83101620.9**

(22) Anmeldetag : **21.02.83**

(54) **Kationische Hydrazonfarbstoffe, ihre Herstellung und ihre Verwendung.**

(30) Priorität : **02.03.82 DE 3207477**

(43) Veröffentlichungstag der Anmeldung : **07.09.83 Patentblatt 83/36**

(45) Bekanntmachung des Hinweises auf die Patenterteilung : **30.07.86 Patentblatt 86/31**

(84) Benannte Vertragsstaaten : **CH DE FR GB IT LI**

(56) Entgegenhaltungen :
**EP-A- 0 044 061**
**DE-B- 1 133 053**

(73) Patentinhaber : **BAYER AG**
**Konzernverwaltung RP Patentabteilung**
**D-5090 Leverkusen 1 Bayerwerk (DE)**

(72) Erfinder : **Raue, Roderich, Dr.**
**Berta-von-Suttner-Strasse 48**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 087 706 B1

**Beschreibung**

Gegenstand der Erfindung sind kationische Hydrazonfarbstoffe der allgemeinen Formel

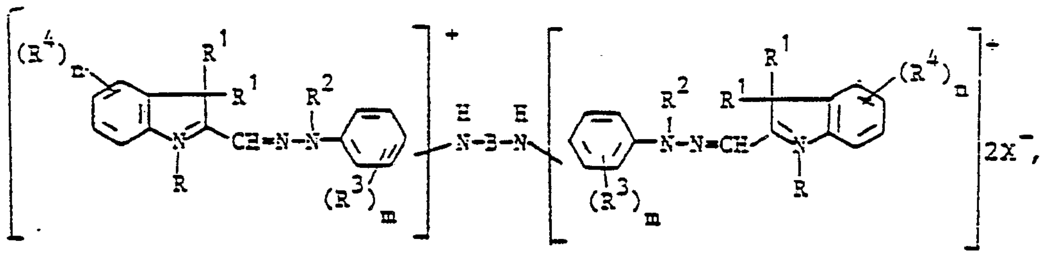

(I)

in welcher

R für einen gegebenenfalls durch Hydroxy, Alkoxy mit 1 bis 4 C-Atomen, Acyloxy, Halogen, Cyan, Carboxy, $C_1$-bis $C_4$-Carbalkoxy, Carbonamido oder Acetyl substituierten Alkylrest mit 1 bis 4 C-Atomen,

$R^1$ für einen Alkylrest mit 1 bis 4 C-Atomen, wobei die beiden Reste auch zu einem Ring geschlossen sein können,

$R^2$ für einen Alkylrest mit 1 bis 4 C-Atomen, der durch Hydroxyl substituiert sein kann,

$R^3$ für einen Alkylrest mit 1 bis 4 C-Atomen, einen Alkoxyrest mit 1 bis 4 C-Atomen oder Halogen,

$R^4$ für einen Alkylrest mit 1 bis 4 C-Atomen, Halogen, Alkoxy mit 1 bis 4 C-Atomen, Phenoxy, Benzyloxy, Benzyl, Carboxyl, einen Carbonsäurealkylester mit 1 bis 4 C-Atomen, eine gegebenenfalls durch 1 oder 2 $C_1$-bis $C_4$-Alkylreste substituierte Carbonamidgruppe, eine gegebenenfalls durch 1 oder 2 $C_1$-bis $C_4$-Alkylreste substituierte Sulfonamidgruppe, Alkylsulfonyl mit 1 bis 4 C-Atomen, Phenylsulfonyl, eine Cyan-, Nitro-, Trifluormethyl-, Acetyl- oder Benzoylgruppe stehen,

B — falls das Brückenglied —NH—B—NH— an den Benzolring gebunden ist — für $B^1$ =

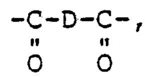,

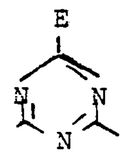

oder

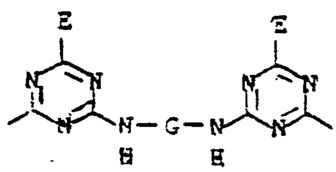

oder

— falls das Brückenglied —NH—B—NH— an den Indoleninring gebunden ist — für $B^2 = B^1$ oder CO,

D für einen Alkylenrest mit 2 bis 6 C-Atomen, einen Phenylen- oder einen Naphthylenrest,

E für Halogen, Hydroxyl, Alkoxy mit 1-4 C-Atomen oder den Rest

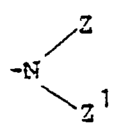

Z und $Z^1$ unabhängig voneinander für Wasserstoff oder den Rest

$$—Y—Z^2$$

Y für Alkylen mit 1 bis 6 C-Atomen,

$Z^2$ für Wasserstoff, Hydroxyl, Pyridinium oder die Reste

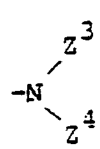

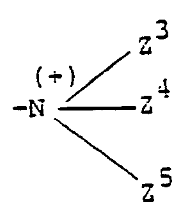 $X^{(-)}$

$Z^3$, $Z^4$ und $Z^5$ unabhängig voneinander für Wasserstoff oder gegebenenfalls durch Hydroxyl substituiertes Alkyl mit 1 bis 4 C-Atomen,

$Z^3$ außerdem für Phenyl, Benzyl oder den Rest

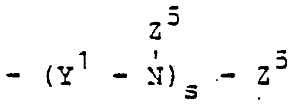

$Y^1$ für Alkylen mit 2-4 C-Atomen und

S für 1-8 stehen,

oder

Z und $Z^1$ sowie $Z^3$ und $Z^4$ ringgeschlossen sind und zusammen mit dem N-Atom einen Pyrrolidin-, Morpholin-, Piperidin- oder Piperazin-Ring bilden, die durch $C_1$ bis $C_4$-Alkyl oder Amino-$C_1$ bis $C_4$-alkyl substituiert sein können,

G für einen Alkylenrest mit 2 bis 6 C-Atomen, einen Phenylenrest oder einen Rest der Formel

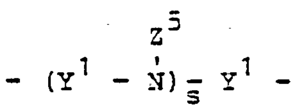

m und n für 0, 1 oder 2 und

$X^{(-)}$ für ein Anion stehen,

und ihre Herstellung.

Eine bevorzugte Gruppe der neuen Farbstoffe entspricht der allgemeinen Formel

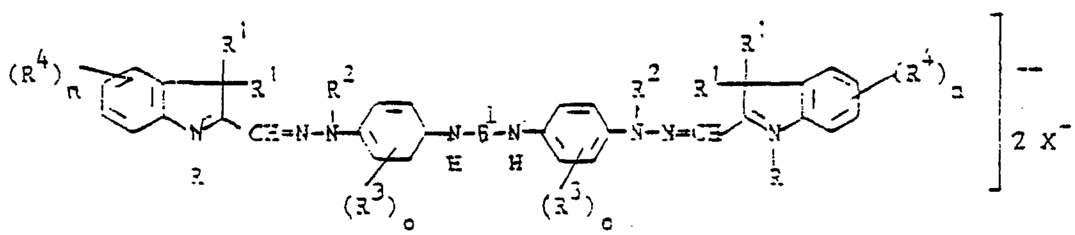

(II)

in welcher

die Reste R, $R^1$, $R^2$, $R^3$, $R^4$, $B^1$, X und n die gleiche Bedeutung wie in Formel I haben und

o für 0 oder 1 steht.

Unter diesen Farbstoffen wiederum sind Verbindungen der allgemeinen Formel

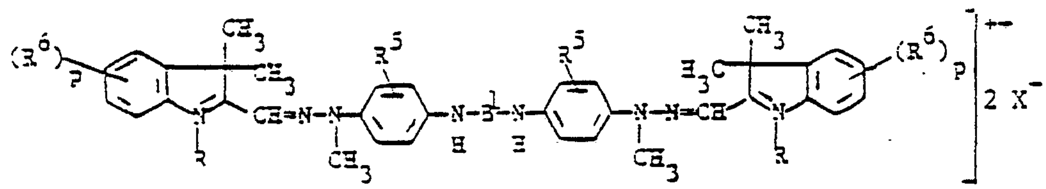

(III)

in welcher

R, $B^1$ und X die gleiche Bedeutung wie in Formel I haben,

$R^5$ für Wasserstoff, Methyl oder Chlor,

$R^6$ für Wasserstoff, Chlor, Methyl, Methoxy oder Ethoxy und

P für 0 oder 1 stehen,

bevorzugt.

Eine weitere Gruppe von Farbstoffen der allgemeinen Formel I entspricht der allgemeinen Formel

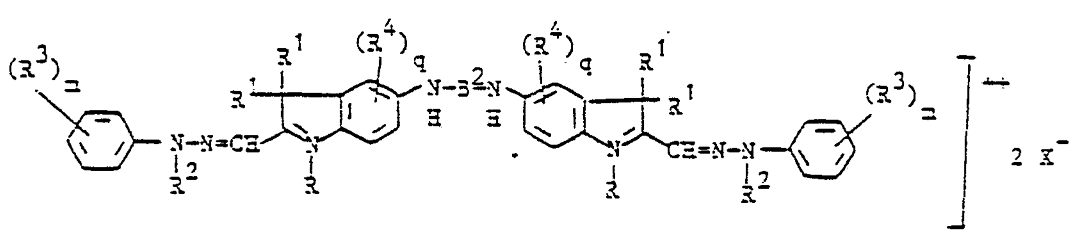

(IV)

in welcher

R, $R^1$, $R^2$, $R^3$, $R^4$, $B^2$, X und m die gleiche Bedeutung wie in Formel I haben, und

q für 0 oder 1 steht.

Unter diesen Farbstoffen wiederum sind Farbstoffe der allgemeinen Formel

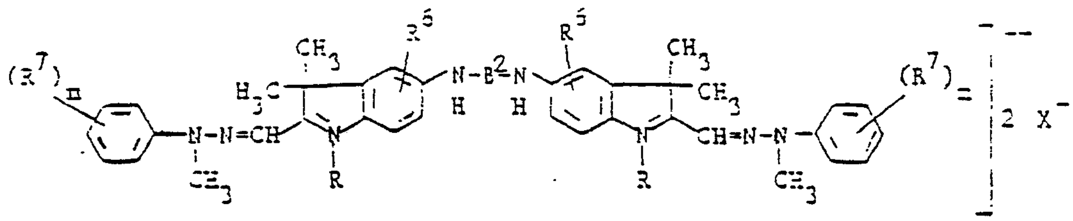 (V)

bevorzugt, worin

R, $B^2$, X und m die gleiche Bedeutung wie in Formel I haben,

$R^6$ die gleiche Bedeutung wie in Formel III hat, und

$R^7$ für Wasserstoff, Chlor, Methyl, Methoxy oder Ethoxy steht.

Zu den erfindungsgemäßen Farbstoffen zählen auch polymere Verbindungen der allgemeinen Formel

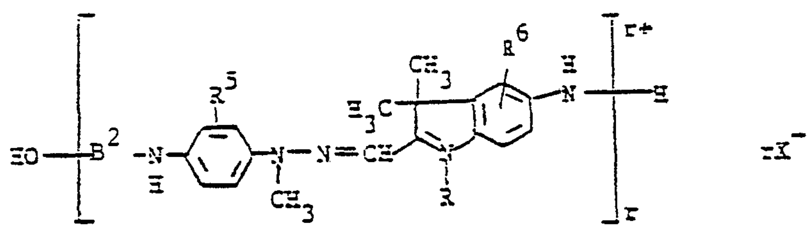 (VI)

in welcher

R, $R^5$, $R^6$, $B^2$ und X die gleiche Bedeutung wie in den Formeln I bzw. III haben, und

r für 2 bis 6 steht.

In den Formeln I bis VI steht Halogen vorzugsweise für Fluor, Chlor oder Brom.

Unter Acyl wird insbesondere Acetyl, Propionyl, Benzoyl oder Carbamoyl verstanden.

Die beiden Reste $R^1$ können beispielsweise zusammen einen Cyclopentyl- oder Cyclohexylring bilden.

Bevorzugt steht E für den Rest

$$NH—Z^6$$

in dem $Z^6$ Wasserstoff, Alkyl mit 1 bis 4 C-Atomen, Hydroxyalkyl mit 2 bis 4 C-Atomen oder die Reste

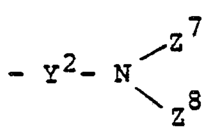 oder $-(Y^3 - NH)_t - H$

mit

$Y^2$ = Alkylen mit 2 bis 6 C-Atomen,

$Z^7$, $Z^8$ = Wasserstoff, Alkyl mit 1 bis 4 C-Atomen, oder Hydroxyalkyl mit 2 bis 4 C-Atomen,

$Y^3$ = Alkylen mit 2 bis 3 C-Atomen

t = 2-5

bedeutet.

Insbesondere steht E für Chlor.

Bevorzugt steht G für einen Alkylenrest mit 2 bis 6 C-Atomen oder den Rest

$$-(Y^3 - \overset{Z_9}{\overset{|}{N}} - )_t - Y^3 -$$

mit $Z^9$ = Wasserstoff oder Alkyl mit 1 bis 4 C-Atomen.

Man erhält die neuen Farbstoffe durch Umsetzung von Hydrazonfarbstoffen der allgemeinen Formel

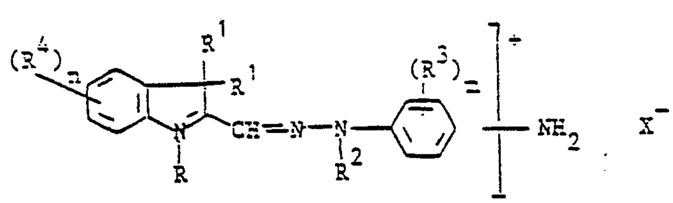 (VII)

in welcher R, $R^1$, $R^2$, $R^3$, $R^4$, X, m und n die gleiche Bedeutung wie in Formel I haben, mit Dihalogenverbindungen der allgemeinen Formel

Hal—B—Hal VIII,

in welcher

B die gleiche Bedeutung wie in Formel I hat und

Hal für Halogen steht,

in wäßriger oder organischer Lösung unter Zusatz von säurebindenden Mitteln.

Geeignete Verbindungen der allgemeinen Formel VIII sind beispielsweise :

Phosgen, Bernsteinsäuredichlorid, Glutarsäuredichlorid, Adipinsäuredichlorid, Terephthalsäuredichlorid, Isophthalsäuredichlorid, Cyanurchlorid, Cyanurbromid, Cyanurfluorid sowie Verbindungen, die durch Umsetzung von 2 mol Cyanurchlorid mit 1 mol 1,4-Phenylendiamin, 1,3-Phenylendiamin, Ethylendiamin, 1,4-Diaminobutan, 1,6-Diaminohexan, Diethylentriamin, Triethylentetramin, Tetraethylenpentamin, Pentaethylenhexamin, Bisaminoethylmethylamin, Bisaminoethylethylamin und Bisaminoethylbutylamin erhalten werden.

Man kann auch zunächst die Verbindungen der Formel VII mit Cyanurchlorid im Molverhältnis 1/1 zu Verbindungen der allgemeinen Formel

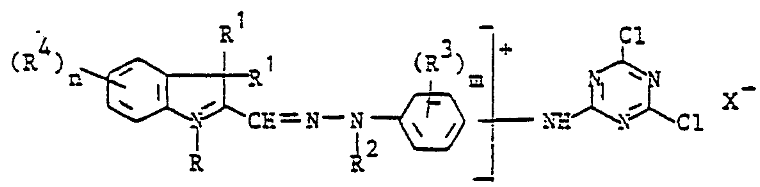

IX umsetzen

und anschließend diese Verbindungen im Molverhältnis 2/1 mit einem Diamin zur Reaktion bringen.

Eine bevorzugte Gruppe erfindungsgemäßer Ausgangsmaterialien entspricht der allgemeinen Formel

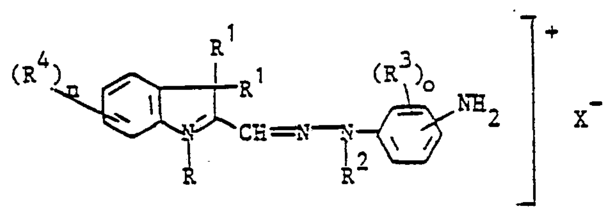

(X)

in welcher R, $R^1$, $R^2$, $R^3$, $R^4$, X, o und n die gleiche Bedeutung wie in Formel II haben.

Man erhält diese Ausgangsmaterialien, indem man Verbindungen der allgemeinen Formel

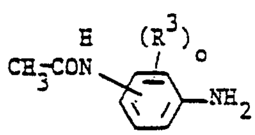

(XI)

in welcher $R^3$ und o die gleiche Bedeutung wie in Formel X haben, in bekannter Weise diazotiert und mit Verbindungen der Formel

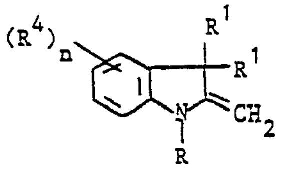

(XII)

in welcher R, $R^1$, $R^4$ und n die gleiche Bedeutung wie in Formel X haben, zu Azofarbstoffen kuppelt, diese mit säurebindenden Mitteln in die Farbbasen überführt, anschließend mit Alkylierungsmitteln zur Reaktion bringt und die Acetylgruppe durch Erwärmen in saurem Medium abspaltet.

Geeignete Ausgangsmaterialien der allgemeinen Formel XI sind beispielsweise :

4-Amino-acetanilid, 2-Chlor-4-amino-acetanilid, 3-Chlor-4-amino-acetanilid, 2-Methyl-4-amino-acetanilid, 3-Methyl-4-amino-acetanilid, 2-Methoxy-4-amino-acetanilid, 3-Methoxy-4-amino-acetanilid, 3-Amino-acetanilid, 3-Amino-4-chlor-acetanilid, 3-Amino-4-methyl-acetanilid, 3-Amino-4-methoxy-acetanilid.

Geeignete Verbindungen der allgemeinen Formel XII sind beispielsweise :

1,3,3-Trimethyl-2-methylen-indolin, 1,3,3,5-Tetramethyl-2-methylen-indolin, 1,3,3,7-Tetramethyl-2-methylen-indolin, 1,3,3-Trimethyl-5-chlor-2-methylen-indolin, 1,3,3-Trimethyl-7-chlor-2-methylen-indolin, 1,3,3-Trimethyl-5,7-dichlor-2-methylen-indolin, 1,3,3-Trimethyl-5-brom-2-methylen-indolin, 1,3,3-Trimethyl-5-methoxy-2-methylen-indolin, 1,3,3-Trimethyl-5-ethoxy-2-methylen-indolin, 1,3,3-Trimethyl-5-oxyethoxy-2-methylen-indolin, 1,3,3-Trimethyl-5-methoxy-7-chlor-2-methylen-indolin, 1,3,3-Trimethyl-5-phenoxy-2-methylen-indolin, 1,3,3-Trimethyl-5-benzyloxy-2-methylen-indolin, 1,3,3-Trimethyl-5-(4-chlorphenoxy)-2-methylen-indolin, 1,3,3-Trimethyl-5-benzyl-2-methylen-indolin, 1,3,3-Trimethyl-5-carbomethoxy-2-methylen-indolin, 1-Ethyl-3,3-dimethyl-5-carboethoxy-2-methylen-indolin, 1,3,3-Trimethyl-5-cyan-2-methylen-indolin, 1,3,3-Trimethyl-5-methylsulfonyl-2-methylen-indolin, 1,3,3-Trimethyl-5-nitro-2-methylen-indolin, 1,3,3-Trimethyl-5-acetyl-2-methylen-indolin, 1,3,3-Trimethyl-5-benzoyl-2-methylen-indolin, 1-Chlorethyl-3,3-dimethyl-2-methylen-indolin, 1-Acetoxyethyl-3,3-dimethyl-2-methylen-indolin.

Geeignete Alkylierungsmittel sind beispielsweise : Dimethylsulfat, Diethylsulfat, Benzolsulfonsäuremethylester, Benzolsulfonsäureethylester, p-Toluolsulfonsäure-methylester, p-Toluolsulfonsäureethylester, Butylbromid, Ethylenoxid und Propylenoxid.

Eine weitere Gruppe erfindungsgemäßer Ausgangsmaterialien entspricht der allgemeinen Formel :

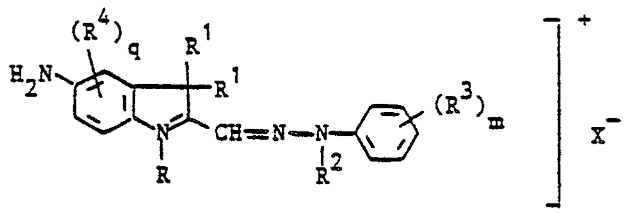

(XIII)

in welcher R, $R^1$, $R^2$, $R^3$, $R^4$, X, m und q die gleiche Bedeutung wie in Formel IV haben.

Man erhält diese Verbindungen, indem man Verbindungen der allgemeinen Formel

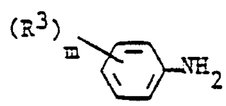

(XIV)

in welcher $R^3$ und m die gleiche Bedeutung wie in Formel IV haben, in an sich bekannter Weise diazotiert und mit Verbindungen der Formel

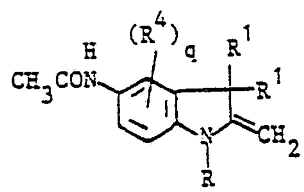

(XV)

in welcher R, $R^1$, $R^4$ und q die gleiche Bedeutung wie in Formel IV haben, zu Azofarbstoffen kuppelt, diese mit säurebindenden Mitteln in die entsprechenden Farbbasen überführt, diese mit Alkylierungsmitteln behandelt und anschließend die Acetylgruppe durch Erwärmen in saurem Medium abspaltet.

Geeignete Verbindungen der allgemeinen Formel XIV sind beispielsweise :

Anilin, 2-Methyl-anilin, 3-Methyl-anilin, 4-Methyl-anilin, 3,4-Dimethyl-anilin, 2-Methoxy-anilin, 3-Methoxy-anilin, 4-Methoxy-anilin, 2,4-Dimethoxy-anilin, 2,5-Dimethoxy-anilin, 4-Ethoxy-anilin, 2-Chlor-anilin, 3-Chlor-anilin, 4-Chlor-anilin, 2-Chlor-4-methoxy-anilin, 2-Chlor-4-ethoxy-anilin.

Geeignete Verbindungen der allgemeinen Formel XV sind zum Beispiel :

1,3,3-Trimethyl-5-acetylamino-2-methylen-indolin, 1,3,3-Trimethyl-5-acetylamino-7-chlor-2-methylen-indolin, 1,3,3-Trimethyl-5-acetylamino-7-methoxy-2-methylen-indolin, 1,3,3,7-Tetramethyl-5-acetylamino-2-methylen-indolin, 1-Ethyl-3,3-dimethyl-5-acetylamino-2-methylen-indolin, 1-Chlorethyl-3,3-dimethyl-5-acetylamino-2-methylen-indolin, 1-Acetoxyethyl-3,3-dimethyl-5-acetylamino-2-methylen-indolin, 1-Hydroxyethyl-3,3-dimethyl-5-acetylamino-2-methylen-indolin.

Die Ausgangsmaterialien zur Herstellung der polymeren kationischen Hydrazonfarbstoffe der allgemeinen Formel VI entsprechen der allgemeinen Formel

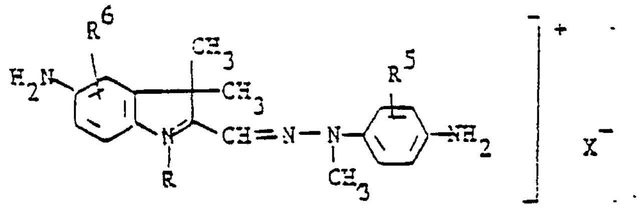

(XVI)

worin R, $R^5$, $R^6$ und X die gleiche Bedeutung wie in Formel VI haben.

Man erhält diese Verbindungen durch Diazotieren von Verbindungen der allgemeinen Formel XI und Kuppeln mit Verbindungen der allgemeinen Formel XV zu Azofarbstoffen, Überführen dieser Azofarbstoffe in die entsprechenden Farbbasen, Alkylieren und Abspalten der Acetylgruppen durch Erwärmen in saurem Medium.

Die Umsetzung dieser Ausgangsmaterialien mit Verbindungen der Formel VIII (mit B = $B^2$) zu den erfindungsgemäßen Farbstoffen erfolgt in wäßrigen oder organischen Lösungsmitteln. Bevorzugt sind Lösungsmittel, die mit Wasser mischbar sind, wie Aceton, Dioxan, Tetrahydrofuran, Dimethylformamid und Dimethylacetamid.

Als säurebindende Mittel eignen sich beispielweise: Natriumbicarbonat, Kaliumbicarbonat, Natriumcarbonat, Kaliumcarbonat, Magnesiumoxid, Triethylamin und Triisopropanolamin.

Die Umsetzung erfolgt vorzugsweise in einem Temperaturbereich zwischen 0 und 100 °C.

Ein weiterer Gegenstand der Erfindung sind ein Verfahren zum Färben von Papier in der Masse und in der Oberfläche unter Verwendung von Farbstoffen der allgemeinen Formel

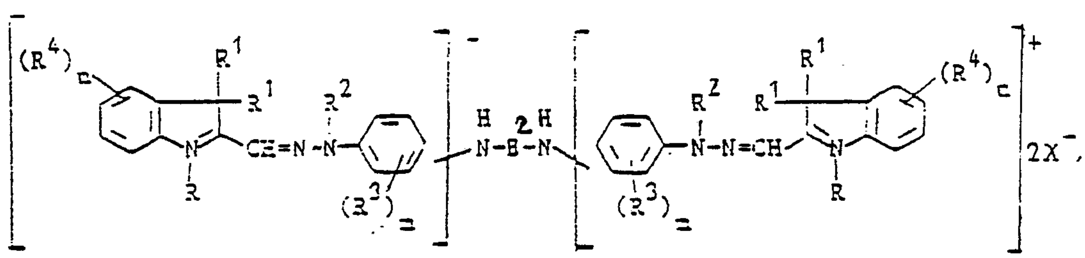

(XVII)

worin die Symbole die gleiche Bedeutung wie in Formel I haben, sowie Mittel zum Färben von Papier, die einen Farbstoff der Formel (XVII) enthalten.

Aus der EP-A-0 044 061 ist ein Verfahren zum Färben von Acrylnitril-Polymerisaten im Gelzustand mit biskationischen Farbstoffen, u. a. mit biskationischen Diazamethinfarbstoffen, deren Chromophore über eine Harnstoff-Brücke verknüpft sind, bekannt.

Beispiel 1

39,1 g des Farbstoffs der Formel

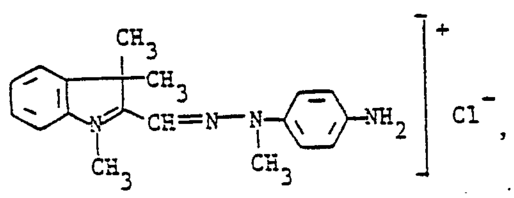

der durch Umsetzung von diazotiertem 4-Aminoacetanilid mit 1,3,3-Trimethyl-2-methylen-indolin, Überführen des Azofarbstoffs in die Farbbase, Quaternieren mit Dimethylsulfat und Verseifen der Acetylgruppe mit wäßriger Salzsäure erhalten wurde und der 13,5 % Wasser enthält, werden in 500 ml Wasser verrührt. Hierzu läßt man eine Lösung von 9,3 g Cyanurchlorid in 100 g Aceton einlaufen, wobei die Temperatur bis auf 29 °C ansteigt. Durch Eintropfen von 20 %iger Sodalösung hält man den pH-Wert auf 5. Nach einstündigem Rühren bei Raumtemperatur erwärmt man das Reaktionsgemisch auf 70 °C, wobei die Farbstoffsuspension in Lösung geht. Dann läßt man 2 h bei 70 °C rühren und hält den pH weiterhin durch Eintropfen von 20 %iger Sodalösung bei 5. Insgesamt beträgt der Verbrauch an 20 %iger Sodalösung 50 ml. Dann läßt man das Reaktionsgemisch wieder auf Raumtemperatur abkühlen und setzt 50 ml 10 %ige Natronlauge bis zur brillant-alkalischen Reaktion zu. Die Suspension der Carbinolbase läßt man über Nacht bei Raumtemperatur rühren, saugt sie ab und wäscht mit 500 ml Wasser nach. Nach mehrstündigem Rühren erhält man 39,4 g der feuchten Carbinolbase mit einem Wassergehalt von 10,1 %. Diese Carbinolbase wird mit 48,4 g Wasser und 88,8 g Eisessig über Nacht bei Raumtemperatur gerührt und die dunkelrote Lösung filtriert. Man erhält 177 g einer Lösung des Farbstoffes der Formel

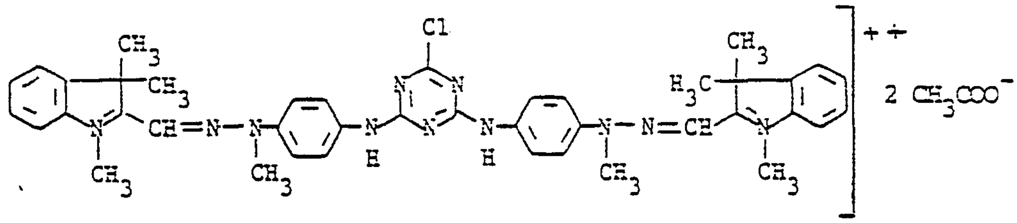

die gebleichten Sulfitzellstoff in einem brillanten Orange mit guter Lichtechtheit anfärbt (C.I. Hue Indication Chart Nr. 6).

λ max : 432 nm ($H_2O$)

Beispiel 2

9,3 g Cyanurchlorid, gelöst in 100 g Aceton, werden zu 150 g Eiswasser gegeben. Dann trägt man bei ca. 5 °C die Lösung von 17,2 g des in Beispiel 1 verwendeten Ausgangsfarbstoffes in 500 ml Wasser ein und rührt bei Raumtemperatur bei pH 4-5, bis die erste Kondensation beendet ist. Die freiwerdende Säure wird mit 15 ml 20 %iger Sodalösung neutralisiert. Dann gibt man nochmals 17,2 g des oben beschriebenen Ausgangsfarbstoffes, gelöst in 500 ml Wasser, zu, erwärmt auf 50 °C und hält den pH durch Zugabe von 10 ml 20 %iger Sodalösung auf 5. Nach 2 stündigem Rühren bei 50 °C erwärmt man das Reaktionsgemisch auf 100 °C und stellt den pH durch Zusatz von Ammoniak auf 7. Nach 6 stündigem Rühren salzt man den Farbstoff mit 120 g Kochsalz aus, saugt ihn ab und wäscht mit 300 ml 5 %iger Kochsalzlösung.

Der Farbstoff der Formel

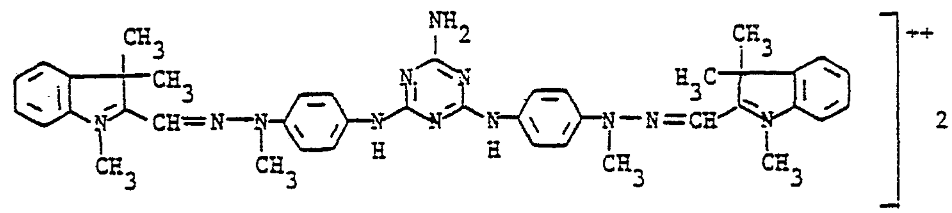

färbt Papier in einem brillanten Orange an (C.I. Hue Indication Chart Nr. 6).

λ max : 458 nm ($CH_3OH$)

Ähnlich gute Ergebnisse erhält man, wenn man anstelle von Ammoniak 2-Aminoethanol, n-Butylamin, 3-Dimethylaminopropylamin, Triethylentetramin, N-Methyl-N,3-aminopropylethanolamin, N,N-Dimethylethylendiamin, Diethanolamin, 1,2-Diaminoethan, 2,5-Diamino-2,5-dimethylhexan, Bis-(2-aminoethyl)-amin, Pentaethylenhexamin, Bis-(3-aminopropyl)-amin, Tetramethylendiamin-1,4, 1-Diethylamino-4-aminopentan, 1-Amino-2-diethylaminoethan, N,N',N''-Trimethyldiethylentriamin, 1,11-Diamino-3,6,9-triazaundecan, 1-Methylamino-3-amino-propan, Methyl-bis-(3-aminopropyl)-amin oder 1,6-Hexamethylendiamin verwendet.

Beispiel 3

18,6 g Cyanurchlorid werden in 200 g Aceton gelöst und die Lösung in 300 g Eiswasser eingetragen. Anschließend gibt man eine Lösung von 34,4 g des in Beispiel 1 als Ausgangsmaterial beschriebenen Hydrazonfarbstoffes in 1 l Wasser unter Kühlung bei 5 °C zu. Mit 32 ml 20 %iger Sodalösung hält man den pH auf 4-5 und läßt das Reaktionsgemisch anschließend 2 h bei Raumtemperatur und pH 5 nachrühren. Man gibt nun 7,3 g Methyl-bis-(3-aminopropyl)-amin zu, wobei der pH bis auf 9,8 ansteigt. Das Reaktionsgemisch wird auf 50 °C erwärmt, wobei der Farbstoff in Lösung geht. Während dem 4 stündigen Nachrühren bei 50 °C sinkt der pH-Wert ab. Sobald er unter 5 fällt, beginnt man mit dem Eintropfen von Sodalösung und hält durch Zutropfen von 8 ml Sodalösung den pH-Wert auf 5. Nach Abkühlen auf Raumtemperatur salzt man mit 165 g Kochsalz aus, läßt die Farbstoffsuspension einige Stunden nachrühren und saugt sie ab. Man erhält 49,9 g des Farbstoffes der Formel

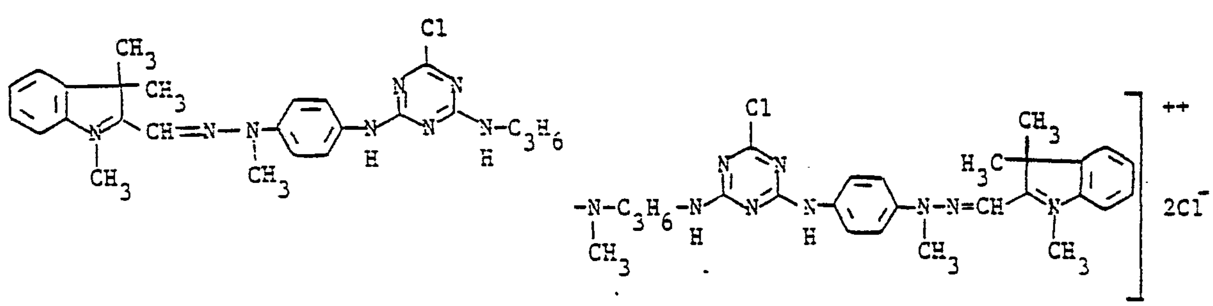

der Papier in einem klaren Orange anfärbt (C.I. Hue Indication Chart Nr. 6).

λmax 444 nm ($H_2O$)

Ähnlich gute Ergebnisse erhält man, wenn man nach den Angaben dieses Beispiels verfährt, aber in der letzten Stufe anstelle von Methyl-bis-(3-amino-propyl)-amin 11,6 g Pentaethylenhexamin, 8,0 g Triethylentetramin, 5,2 g Bis-(2-amino-ethyl)-amin, 9,5 g 1,11-Diamino-3,6,9-triazaundecan, 5 g N,N-Dimethylethylendiamin, 5,8 g 1,6-Hexamethylendiamin, 5,4 g 1,4-Diaminobenzol oder 5,4 g 1,3-Diaminobenzol einsetzt.

## Beispiel 4

9,3 g Cyanurchlorid werden in 100 g Aceton gelöst und zu 150 g Eiswasser gegeben. In diese Suspension trägt man eine Lösung von 18,7 g des Hydrazonfarbstoffes der Formel

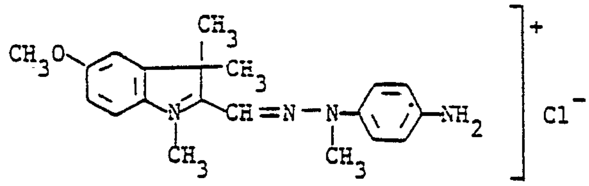

in 500 ml Wasser ein und hält den pH-Wert durch Zutropfen von 18 ml 20 %iger Sodalösung auf 4-5. Nach 4 stündigem Rühren bei Raumtemperatur gibt man nochmals eine Lösung von 18,7 g des Ausgangsfarbstoffes in 500 ml Wasser zu und erwärmt das Reaktionsgemisch auf 50 °C. Durch Eintropfen von 7 ml 20 %iger Sodalösung wird der pH auf 5 gehalten. Nunmehr wird das Reaktionsgemisch auf 100 °C erwärmt und 6,5 h bei dieser Temperatur gehalten, wobei der pH-Wert durch Eintropfen von 10 ml 20 %iger Sodalösung auf 5 eingestellt wird. Nach Abkühlen wird der Farbstoff ausgesalzen, die Farbstoffsuspension einige Stunden gerührt, abgesaugt und mit 5 %iger Kochsalzlösung gewaschen. Man erhält 34,1 g des Farbstoffes der Formel

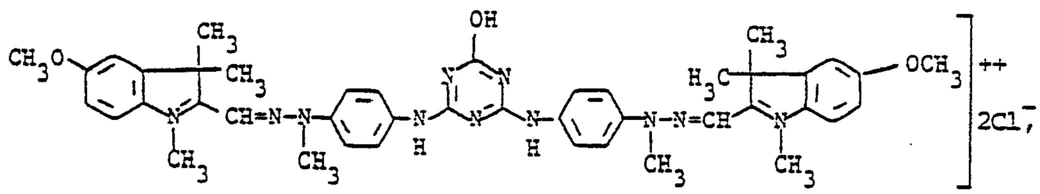

der Papier in einem kräftigen Orange anfärbt. (C.I. Hue Indication Chart Nr. 6).

λmax 468 nm ($CH_3OH$)

Verfährt man wie im obigen Beispiel beschrieben bis zur 2. Zugabe des Ausgangsfarbstoffes, stellt dann mit Ammoniak auf pH 7 und erwärmt 6 h auf 100 °C, wobei man den pH durch weitere Ammoniakzugabe (insgesamt 14 ml) bei 6,6 hält, und arbeitet dann wie oben beschrieben auf, so erhält man einen Farbstoff der Formel

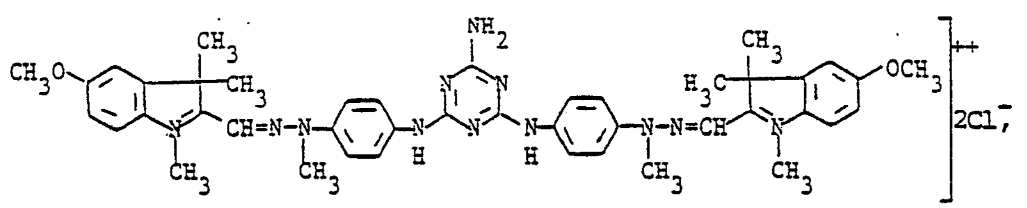

der gleichfalls Papier in einem kräftigen Orange anfärbt. (C.I. Hue Ind. Chart Nr. 6).

λmax 440 nm ($H_2O$)

Setzt man in der letzten Stufe anstelle von Ammoniak 4 g 2-Aminoethanol, 6,5 g Dimethylaminopropylamin, 7,3 g N-Methyl-N,3-aminopropylethanolamin oder 9,0 g Triethylentetramin zu und verfährt sonst in gleicher Weise, so erhält man ebenfalls Farbstoffe, die Papier in kräftigen Orangetönen anfärben.

## Beispiel 5

9,3 g Cyanurchlorid werden in 100 g Aceton gelöst und zu 150 g Eiswasser gegeben. In diese Suspension trägt man 20 g des Hydrazonfarbstoffes der Formel

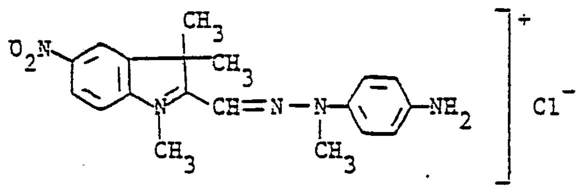

in 500 ml 50 °C warmes Wasser ein. Mit 30 ml 20 %iger Sodalösung hält man den pH-Wert währenddessen auf 4-5. Man läßt 2 h bei Raumtemperatur nachrühren und trägt dann nochmals eine Lösung von 20 g des Ausgangsfarbstoffes in 500 ml heißem Wasser ein. Das Reaktionsgemisch wird nun auf 50 °C erwärmt und durch Zugabe von 16 ml 20 %iger Sodalösung auf pH 5 eingestellt. Nach 2 h erwärmt man die Lösung auf 100 °C und läßt 6 h bei 100 °C rühren, wobei durch Zugabe von 11 ml 20 %iger Sodalösung der pH-Wert bei 5 gehalten wird. Nach Abkühlen saugt man den vollständig auskristallisierten Farbstoff ab und wäscht ihn mit Wasser. Man erhält 37,7 g des Farbstoffes der Formel.

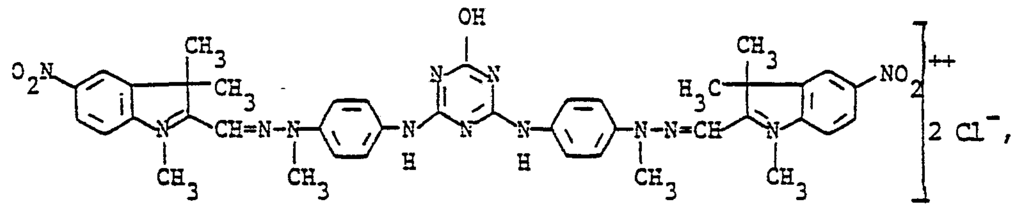

der Papier in einem gedeckten Rot anfärbt. (C.I. Hue Indication Chart Nr. 7).
λmax 472 nm ($CH_3OH$)

Verfährt man wie im obigen Beispiel beschrieben und setzt nach Zugabe der 2. Menge Ausgangsfarbstoff und vor dem Erwärmen auf 100 °C 4 g 2-Aminoethanol zu (der pH steigt hierbei auf 8,4) und verfährt sonst in gleicher Weise, so erhält man einen Farbstoff, der Papier ebenfalls in einem gedeckten Rot anfärbt (C.I. Hue Indication Chart Nr. 7).

## Beispiel 6

9,3 g Cyanurchlorid werden in 100 g Aceton gelöst und zu 150 g Eiswasser gegeben. In diese Suspension trägt man 38 g des Hydrazonfarbstoffes der Formel

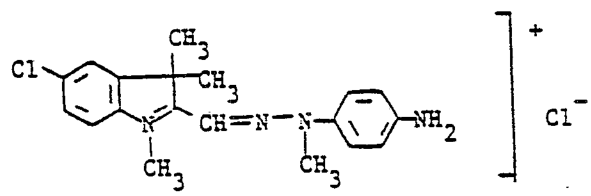

in 1 l Wasser in ca. 30 min ein. Durch Zugabe von 52 ml 20 %iger Sodalösung hält man den pH-Wert bei 4-5 und läßt 6 h bei 50 °C rühren. Nach Abkühlen auf Raumtemperatur saugt man den auskristallisierten Farbstoff ab und wäscht mit etwas Wasser nach. Man erhält 38,7 g des Farbstoffes der Formel

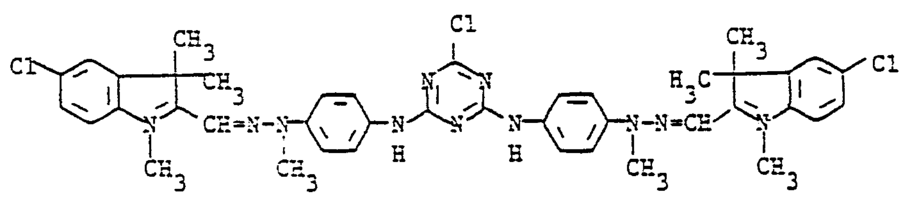

der Papier orange anfärbt. (C.I. Hue Indication Chart Nr. 6).
λmax 455 nm ($CH_3OH$)

## Beispiel 7

9,3 g Cyanurchlorid werden in 100 g Aceton gelöst und zu 150 g Eiswasser gegeben. Man setzt nun zunächst eine Lösung von 19 g des in Beispiel 6 beschriebenen Ausgangsfarbstoffes in 500 ml Wasser bei Raumtemperatur zu, wobei der pH-Wert mit 28 ml 20 %iger Sodalösung auf 4-5 eingestellt wird, und dann nochmals die gleiche Menge des Ausgangsfarbstoffes, gelöst in 500 ml Wasser, unter Erhöhung der

Reaktionstemperatur auf 50 °C. 22 ml 20 %ige Sodalösung werden benötigt, um den pH auf 5 zu halten. Man setzt nun 6,5 g Dimethylaminopropylamin zu, wobei der pH bis auf 8,2 ansteigt und erwärmt das Reaktionsgemisch auf 100 °C. Sobald der pH auf 5,7 abgefallen ist, werden nochmals 1,5 g Dimethylaminopropylamin zugegeben. Nach 6 stündigen Rühren bei 100 °C läßt man die Reaktionsmischung auf Raumtemperatur abkühlen, saugt den Farbstoff ab und wäscht mit etwas Wasser nach. Man erhält 38,2 g des Farbstoffes der Formel

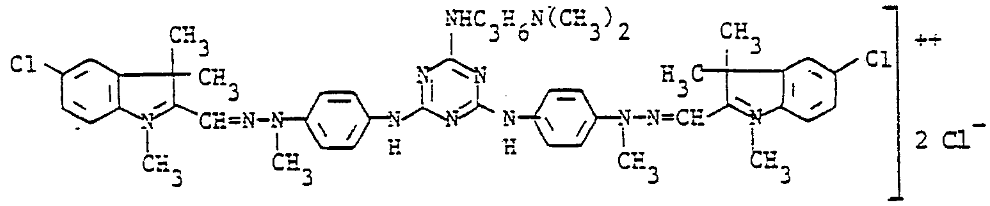

der Papier in einem rotstichigen Orange anfärbt. (C.I. Hue Ind. Chart Br. 6).

λmax 465 nm ($CH_3OH$)

Verwendet man anstelle von Dimethylaminopropylamin 5 g 1,2-Diaminoethan, 9 g Triethylentetramin,6,5 g 1-Amino-2-diethylaminoethan oder 7,3 g N-Methyl-N,3-aminopropylethanolamin und verfährt sonst in gleicher Weise, so erhält man ebenfalls Farbstoffe, die Papier in orangen Farbtönen anfärben.

Beispiel 8

18,6 g Cyanurchlorid werden in 200 g Aceton gelöst und zu 300 g Eiswasser gegeben. Innerhalb einer halben Stunde setzt man hierzu eine Lösung von 38 g des in Beispiel 6 beschriebenen Ausgangsfarbstoffes in 1 l 50 °C warmen Wasser unter Kühlung zu, wobei die Reaktionstemperatur unter 5 °C bleiben soll. Durch Zugabe von 55 ml 20 %iger Sodalösung hält man den pH-Wert bei 5. Nach 2 stündigem Rühren bei Raumtemperatur gibt man 5,4 g 1,4-Diaminobenzol, gelöst in 40 g Aceton, zu und erwärmt das Reaktionsgemisch auf 50 °C. Durch Zutropfen von 30 ml 20 %iger Sodalösung hält man den pH-Wert auf 5. Man läßt nun 2 h bei 50 °C und 6 h bei 75 °C nachrühren, kühlt das Reaktionsgemisch auf Raumtemperatur ab, saugt den gebildeten Farbstoff ab und wäscht mit Wasser nach. Man erhält 48,5 g eines Farbstoffes der Formel

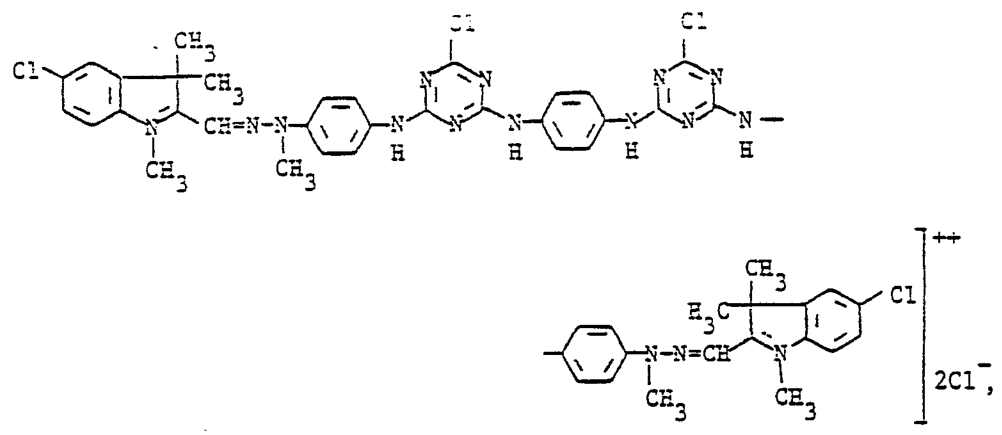

der Papier orange anfärbt. (C.I. Hue Indication Chart Nr. 6).

λmax 458 nm ($CH_3OH$)

Verfährt man in der oben angegebenen Weise und verwendet anstelle von 5,4 g 1,4-Diamino-benzol 5,4 g 1,3-Diaminobenzol, 7,3 g Methyl-bis-(3-aminopropyl)-amin oder 11,6 g Pentaethylenhexamin, so erhält man ebenfalls wertvolle Farbstoffe, die Papier orange anfärben.

Beispiel 9

9,3 g Cyanurchlorid werden in 100 g Aceton gelöst und zu 100 g Eiswasser gegeben. In diese Suspension trägt man eine 50 °C warme Lösung von 40,2 g des Hydrazonfarbstoffes der Formel

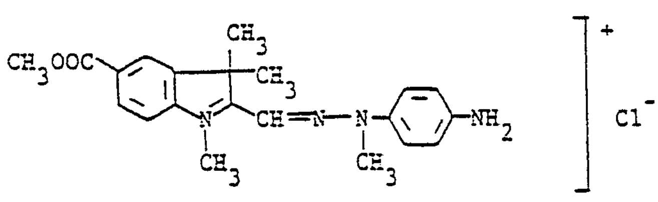

in 1 000 ml Wasser innerhalb von 30 min ein, wobei man gleichzeitig durch Zutropfen von 20 %iger Sodalösung den pH auf 4-5 hält. Nach 6 stündigem Rühren bei 50 °C und pH 5 wurden 48 ml Sodalösung verbraucht. Man läßt die Farbstoffsuspension einige Stunden bei Raumtemperatur nachrühren, saugt den Farbstoff ab und wäscht ihn mit Wasser. Man erhält 34,9 g des Farbstoffes der Formel

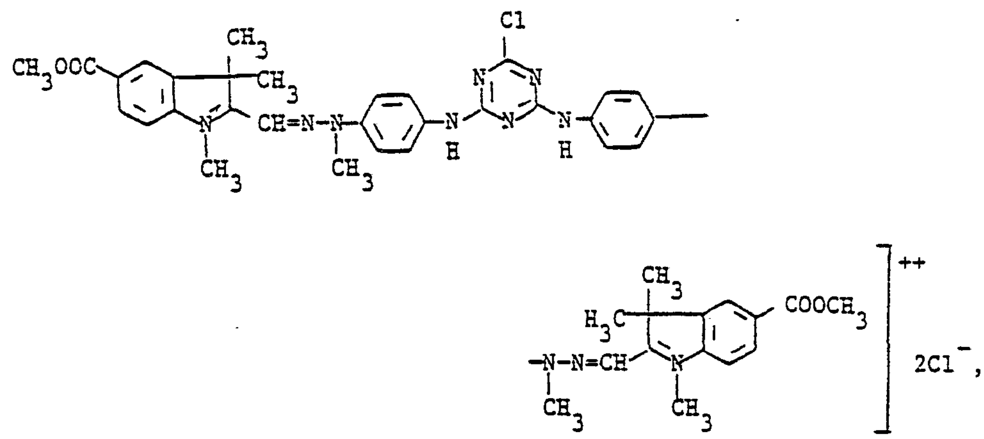

der Papier orange anfärbt. (C.I. Hue Indication Chart Nr. 6).

λmax 457 nm ($CH_3OH$)

Verfährt man wie oben angegeben, gibt jedoch nach 2 stündigem Nachrühren bei 50 °C 6,5 g Dimethylaminopropylamin zu, wobei der pH bis auf 9,1 ansteigt, rührt 6 h bei 100 °C, salzt den Farbstoff mit 100 g Kochsalz aus, kühlt die Suspension auf Raumtemperatur ab, saugt ab und trocknet den Rückstand im Vakuum, so erhält man ebenfalls einen Farbstoff, der Papier orange anfärbt.

Beispiel 10

9,3 g Cyanurchlorid werden in 100 g Aceton gelöst und zu 100 g Eiswasser gegeben. Hierzu läßt man innerhalb von 40 min eine Lösung von 38 g des Farbstoffes der Formel

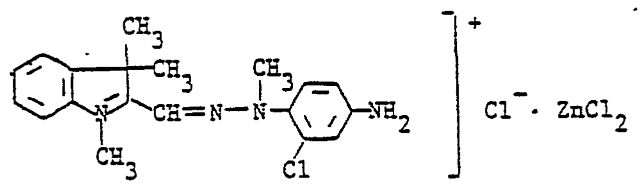

in 2 l 50 °C warmes Wasser einlaufen, während gleichzeitig durch Eintropfen von 20 %iger Sodalösung der pH 4-5 gehalten wird. Man läßt 6 h bei 50 °C nachrühren, wobei durch weiteres Zutropfen von Sodalösung der pH bei 5 gehalten wird. Nach Abkühlen auf Raumtemperatur wird der Farbstoff mit 110 g Kochsalz ausgesalzer, nach mehrstündigem Nachrühren abgesaugt und mit 500 ml 10 %iger Kochsalzlösung gewaschen. Man erhält 48,3 g des Farbstoffes der Formel

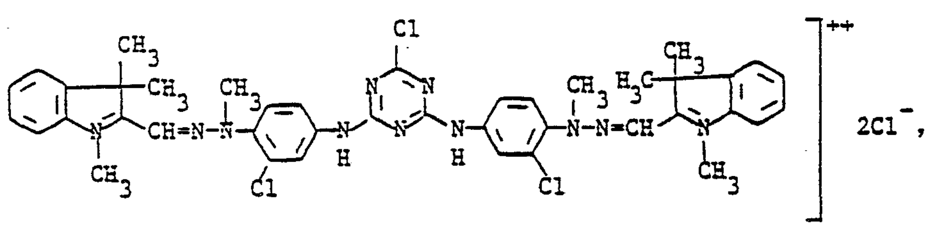

der Papier grünstichig gelb anfärbt. (C.I. Hue Indication Chart Nr. 2).

λmax 402 nm ($CH_3OH$)

Beispiel 11

9,3 g Cyanurchlorid werden in 100 g Aceton gelöst und zu 150 g Eiswasser gegeben. Man setzt nun 19 g des in Beispiel 10 verwendeten Ausgangsfarbstoffes, gelöst in 1 l 50 °C warmem Wasser, zu und hält den pH-Wert durch Eintropfen von 20 ml 20 %iger Sodalösung auf 4-5. Nach 2 stündigem Rühren bei Raumtemperatur setzt man nochmals eine Lösung von 19 g des in Beispiel 10 beschriebenen

Ausgangsfarbstoffes in 1 l Wasser von 50 °C zu und läßt das Reaktionsgemisch 2,5 h bei 50 °C nachrühren, wobei der pH durch Zugabe von 10 ml 20 %ig. Sodalösung bei 5 gehalten wird. Danach gibt man 6,5 g Dimethylaminopropylamin zu dem Reaktionsgemisch, wobei der pH bis auf 8,3 ansteigt. Nach 6 stündigem Rühren bei 100 °C liegt der pH bei 7,5. Nach Abkühlen auf Raumtemperatur salzt man den Farbstoff mit 160 g Kochsalz aus, läßt die Suspension einige Zeit nachrühren, saugt den Rückstand ab und wäscht ihn mit 500 ml 10 %iger Kochsalzlösung. Man erhält 48,6 g des Farbstoffes der Formel

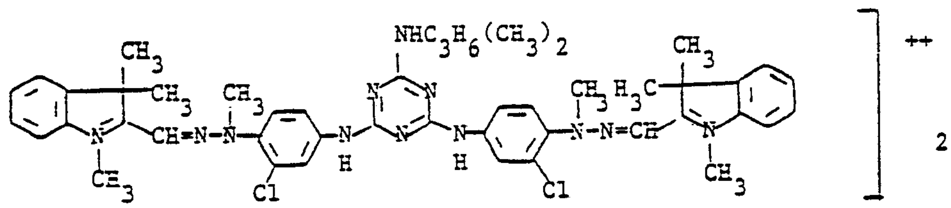

2 $Cl^-$,

der papier grünstichig Gelb anfärbt. (C.I. Hue Indication Chart Nr. 2).

λmax 401 nm ($CH_3OH$)

Verfährt man in der oben beschriebenen Weise und verwendet anstelle von 6,5 g Dimethylaminopropylamin 5 g 1,2-Diaminoethan oder 9,0 g Triethylentetramin, so erhält man ebenfalls wertvolle Farbstoffe, die Papier in grünstichig gelben Tönen anfärben.

Beispiel 12

9,3 g Cyanurchlorid werden in 100 g Aceton gelöst und zu 150 g Eiswasser gegeben. In diese Suspension trägt man 37,4 g des Farbstoffes der Formel

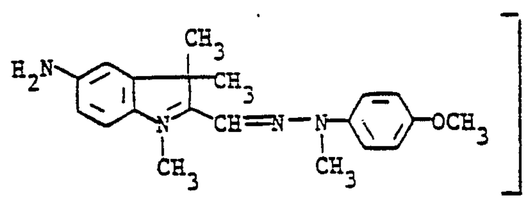

$Cl^-$,

gelöst in 1 000 ml Wasser, ein. Durch Zugabe von 20 %iger Sodalösung hält man den pH-Wert auf 4-5. Man erwärmt die Suspension auf 60 °C, wobei der Farbstoff in Lösung geht. Durch weitere Zugabe von 20 %iger Sodalösung wird der pH auf 5 gehalten. Insgesamt werden 35 ml 20 %ige Sodalösung verbraucht. Nach Abkühlen wird der Farbstoff mit 45 g Kochsalz ausgesalzen und nach mehrstündigem Nachrühren abgesaugt und mit 5 %iger Kochsalzlösung gewaschen. Man erhält 36,5 g eines Farbstoffes der Formel

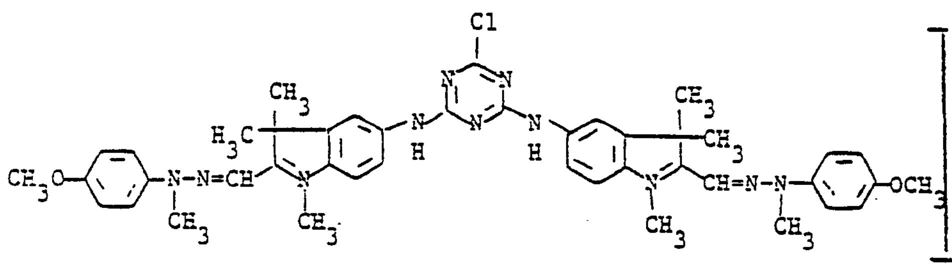

2$Cl^-$,

der Papier in einem brillanten Orange anfärbt. (C.I. Hue Indication Chart Nr. 6).

λmax 448 nm ($CH_3OH$)

Verwendet man anstelle des oben angegebenen Ausgangsfarbstoffes, der als Diazokomponente 4-Anisidin enthält, Ausgangsfarbstoffe, die man durch Diazotieren von Anilin, 2-Toluidin, 4-Toluidin, 2-Anisidin, 2,4-Dimethoxyanilin oder 2,5-Dimethoxy-anilin und Kuppeln auf 1,3,3-Trimethyl-5-acetyl-amino-2-methylenindolin, Überführen des Azofarbstoffes in die Farbbase, Methylieren mit Dimethylsulfat und Verseifen der Acetylaminogruppe in wäßriger, saurer Lösung erhält, und verfährt ansonsten in gleicher Weise, so erhält man ebenfalls wertvolle Farbstoffe, die Papier in gelben, goldgelben und orangen Farbtönen anfärben.

Beispiel 13

9,3 g Cyanurchlorid werden in 100 g Aceton gelöst und zu 150 g Eiswasser gegeben. In diese Suspension trägt man 17,9 g des Ausgangsfarbstoffes der Formel

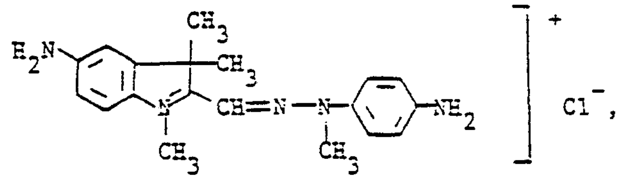

gelöst in 500 ml Wasser ein. Durch gleichzeitiges Eintropfen von 20 %iger Sodalösung hält man den pH-Wert auf 5. Man erwärmt das Reaktionsgemisch auf 50 °C und hält es 6 h bei dieser Temperatur, wobei man den pH durch weiteres Eintropfen von 20 %iger Sodalösung verbraucht. Nach Abkühlen wird der Farbstoff mit 25 g Kochsalz ausgesalzen, nach mehrstündigem Rühren abgesaugt und im Vakuum getrocknet. Man erhält 16,8 g des Farbstoffes der Formel

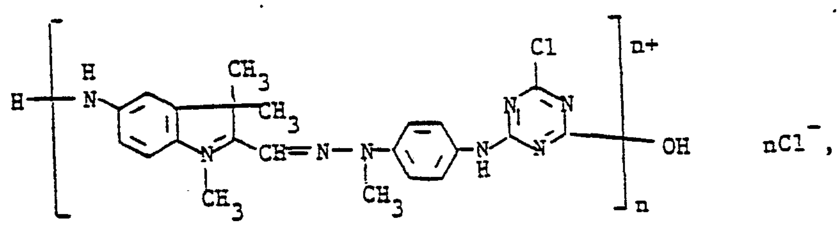

der Papier in einem kräftigen Orange (Colour Index Hue Indication Chart Nr. 6) anfärbt.

λmax 452 nm ($CH_3OH$)

## Beispiel 14

34,3 g des in Beispiel 1 beschriebenen Ausgangsfarbstoffes werden in 1 000 ml Wasser unter Erwärmen gelöst und dann auf 5-10 °C abgekühlt. Man tropft eine Lösung von 10,2 g Terephthalsäuredichlorid in 100 g Aceton bei 5-10 °C innerhalb von 1 h ein und hält gleichzeitig durch Eintropfen von 10 %iger NaOH den pH zwischen 5 und 6. Dann läßt man die Temperatur auf Raumtemperatur kommen und rührt noch 4 h bei pH 5-6 nach. Insgesamt werden 37 ml 10 %ige NaOH verbraucht. Nach mehrstündigem Nachrühren wird der Farbstoff abgesaugt und mit 500 ml 5 %iger Kochsalzlösung gewaschen. Man erhält 33,2 g eines Farbstoffes der Formel

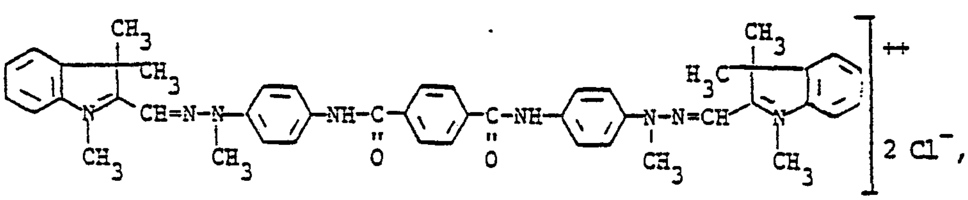

der Papier in einem gelbstichigen Orange anfärbt. (C.I. Hue Indication Chart Nr. 5).

λmax 440 nm ($H_2O$)

Verwendet man anstelle von Terephthalsäuredichlorid die gleiche Menge Isophthalsäuredichlorid oder 11,9 g 4-Chlor-isophthalsäuredichlorid, so erhält man ebenfalls wertvolle Farbstoffe, die Papier gelbstichig orange anfärben. (C.I. Hue Indication Chart Nr. 5).

## Beispiel 15

34,3 g des in Beispiel 1 verwendeten Ausgangsfarbstoffes werden in 1 000 ml Wasser unter Erwärmen gelöst. Bei 30-40 °C und pH 5-7 wird Phosgen eingeleitet, bis kein Ausgangsfarbstoff mehr im Dünnschichtchromatogramm nachweisbar ist. Nach 35 min Phosgeneinleiten kristallisiert das Reaktionsprodukt aus. Insgesamt wurden 2 h Phosgen eingeleitet. Mit Stickstoff wird über Nacht der Phosgenüberschuß abgeblasen und der Farbstoff der Formel

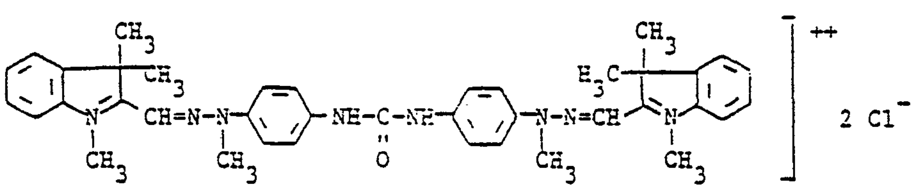

abgesaugt. Er wird mit 1 l Wasser verrührt, durch Zusatz von 42 ml 10 %iger Natronlauge in die

Carbinolbase überführt, und nach 3 stündigem Rühren bei Raumtemperatur wird die Carbinolbase abgesaugt und neutral gewaschen. 20 g dieser Carbinolbase werden mit 80 g Eisessig 1 h bei 70 °C verrührt und nach Abkühlen auf Raumtemperatur filtriert. Die so erhaltene Farbstofflösung eignet sich zum Färben von Papier in einem kräftigen Orange. (C. I. Hue Indication Chart Nr. 6).

$\lambda$max 462 nm ($CH_3OH$)

Ähnlich wertvolle Farbstoffe erhält man, wenn man anstelle des oben beschriebenen Ausgangsfarbstoffes die in den Beispielen 4, 6 und 10 beschriebenen Ausgangsfarbstoffe verwendet.

Beispiel 16

Ein aus gebleichtem Sulfitzellstoff bestehender Trockenstoff wird im Holländer mit soviel Wasser angeschlagen und bis zum Mahlgrad 40° SR gemahlen, daß der Trockengehalt etwas über 2,5 % liegt, und anschließend mit Wasser auf exakt 2,5 % Trockengehalt des Dickstoffes eingestellt. 200 g dieses Dickstoffes werden mit 5 g einer 0,25 %igen wäßrigen Lösung des Farbstoffes gemäß Beispiel 1 versetzt und ca. 5 min verrührt. Man verdünnt die Masse mit ca. 500 g Wasser auf 700 ml und stellt hieraus in bekannter Weise durch Absaugen über einen Blattbildner Papierblätter her. Sie weisen eine intensive, orange Färbung auf. Im Abwasser des Blattbildner ermittelt man fotometrisch die Menge des nicht an das Papier gebundenen Farbstoffes zu ca. 7 %.

**Patentansprüche**

1. Kationische Hydrazonfarbstoffe der allgemeinen Formel

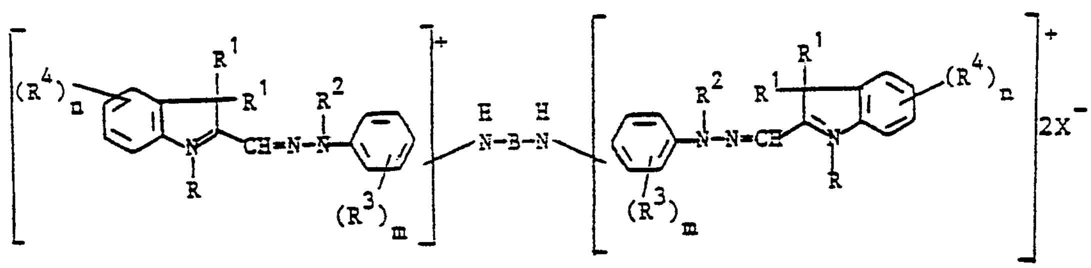

in welcher

R für einen gegebenenfalls durch Hydroxy, Alkoxy mit 1 bis 4 C-Atomen, Acyloxy, Halogen, Cyan, Carboxy, $C_1$-bis $C_4$-Carbalkoxy, Carbonamido oder Acetyl substituierten Alkylrest mit 1 bis 4 C-Atomen,

$R^1$ für einen Alkylrest mit 1 bis 4 C-Atomen, wobei die beiden Reste auch zu einem Ring geschlossen sein können,

$R^2$ für einen Alkylrest mit 1 bis 4 C-Atomen, der durch Hydroxyl substituiert sein kann,

$R^3$ für einen Alkylrest mit 1 bis 4 C-Atomen, einen Alkoxyrest mit 1 bis 4 C-Atomen oder Halogen,

$R^4$ für einen Alkylrest mit 1 bis 4 C-Atomen, Halogen, Alkoxy mit 1 bis 4 C-Atomen, Phenoxy, Benzyloxy, Benzyl, Carboxyl, einen Carbonsärealkylester mit 1 bis 4 C-Atomen, eine gegebenenfalls durch 1 oder 2 $C_1$-bis $C_4$-Alkylreste substituierte Carbonamidgruppe, eine gegebenenfalls durch 1 oder 2 $C_1$-bis $C_4$-Alkylreste substituierte Sulfonamidgruppe, Alkylsulfonyl mit 1 bis 4 C-Atomen, Phenylsulfonyl, eine Cyan-, Nitro-, Trifluormethyl-, Acetyl- oder Benzoylgruppe stehen,

B — falls das Brückenglied —NH—B—NH— an den Benzolring gebunden ist — für $B^1$ =

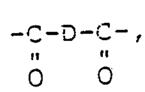,
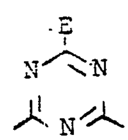

oder

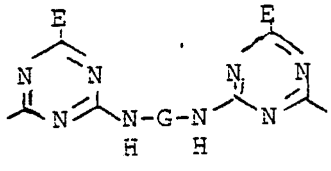

oder

— falls das Brückenglied —NH—B—NH— an den Indoleninring gebunden ist - für $B^2$ = $B^1$ oder CO,

D für einen Alkylenrest mit 2 bis 6 C-Atomen, einen Phenylen- oder einen Naphthylenrest,

E für Halogen, Hydroxyl, Alkoxy mit 1-4 C-Atomen oder den Rest

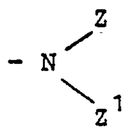

Z und $Z^1$ unabhängig voneinander für Wasserstoff oder den Rest

$$—Y—Z^2 .$$

Y für Alkylen mit 1 bis 6 C-Atomen,
$Z^2$ für Wasserstoff, Hydroxyl, Pyridinium oder die Reste

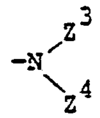

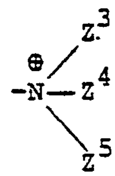

$X^{(-)}$

$Z^3$, $Z^4$ und $Z^5$ unabhängig voneinander für Wasserstoff oder gegebenenfalls durch Hydroxyl substituiertes Alkyl mit 1 bis 4 C-Atomen,
$Z^3$ außerdem für Phenyl, Benzyl oder den Rest

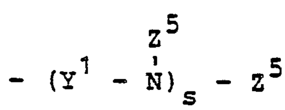

$Y^1$ für Alkylen mit 2-4 C-Atomen und
s für 1-8 stehen,
oder
Z und $Z^1$ sowie $Z^3$ und $Z^4$ ringgeschlossen sind und zusammen mit dem N-Atom einem Pyrrolidin-, Morpholin-, Piperidin- oder Piperazin-Ring bilden, die durch $C_1$ bis $C_4$-Alkyl oder Amino-$C_1$ bis $C_4$-alkyl substituiert sein können,
G für einen Alkylenrest mit 2 bis 6 C-Atomen, einen Phenylenrest oder einen Rest der Formel

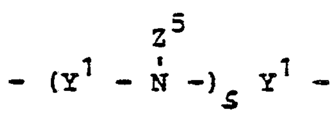

m und n für 0, 1 oder 2 und
$X^{(-)}$ für ein Anion stehen.
2. Kationische Hydrazonfarbstoffe der allgemeinen Formel

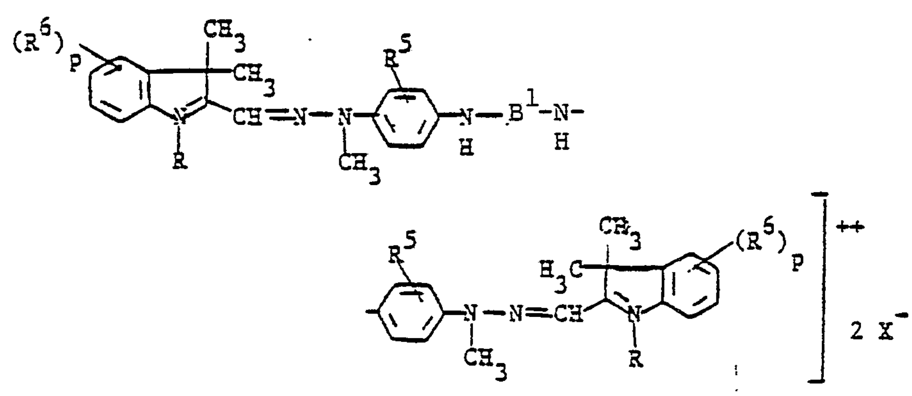

worin
R, $B^1$ und X die gleiche Bedeutung wie in Anspruch 1 haben,
$R^5$ für Wasserstoff, Methyl oder Chlor,
$R^6$ für Wasserstoff, Chlor, Methyl, Methoxy oder Ethoxy und
p für 0 oder 1 stehen.

3. Kationische Hydrazonfarbstoffe der allgemeinen Formel

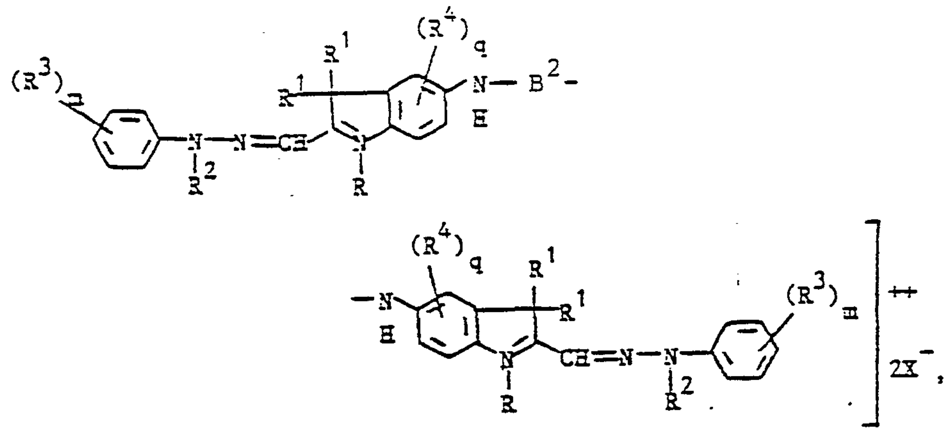

worin

R, $R^1$, $R^2$, $R^3$, $R^4$, $B^2$, X und m die in Anspruch 1 angegebenen Bedeutungen haben, und q für 0 oder 1 steht.

4. Kationische Hydrazonfarbstoffe der allgemeinen Formel

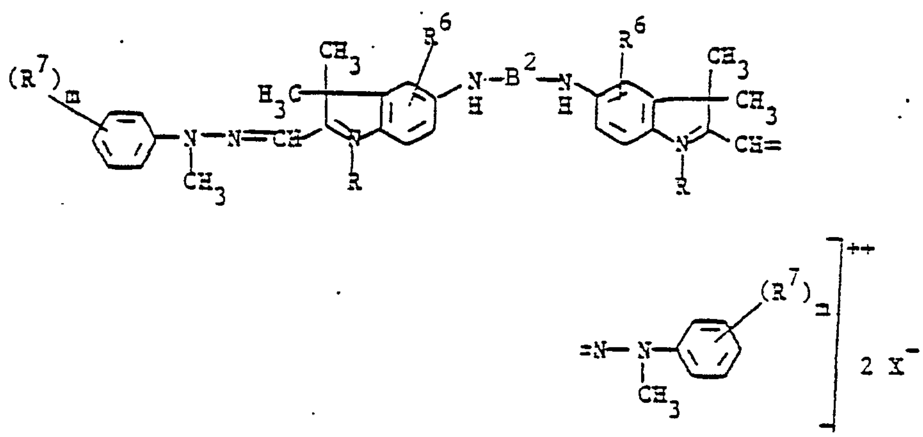

worin

R, $B^2$, X und m die Bedeutungen von Anspruch 1 haben,
$R^6$ die gleiche Bedeutung wie in Anspruch 2 hat, und
$R^7$ für Wasserstoff, Chlor, Methyl, Methoxy oder Ethoxy steht.

5. Polymere kationische Hydrazonverbindungen der allgemeinen Formel

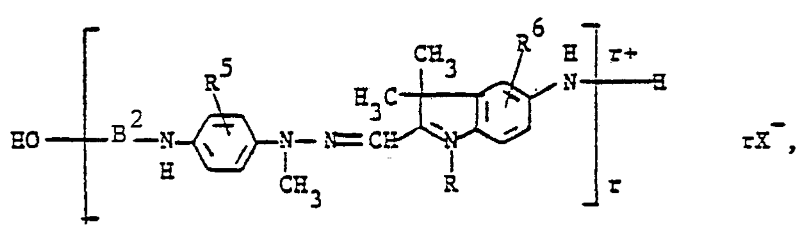

worin

R, $B^2$ und X die in Anspruch 1 angegebenen Bedeutungen haben,
$R^5$ und $R^6$ die Bedeutungen von Anspruch 2 haben, und
r für 2 bis 6 steht.

6. Verfahren zur Herstellung von kationischen Hydrazonfarbstoffen gemäß Anspruch 1, dadurch gekennzeichnet, daß man Hydrazonfarbstoffe der allgemeinen Formel

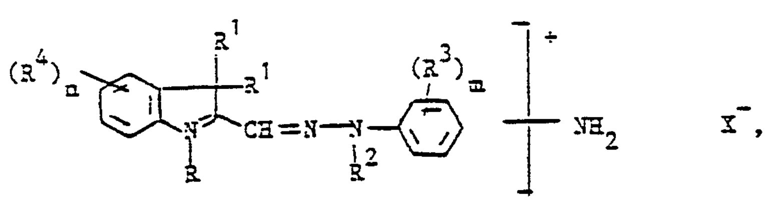

in welcher R, $R^1$, $R^2$, $R^3$, $R^4$, X, m und n die gleiche Bedeutung wie in Anspruch 1 haben, mit Dihalogenverbindungen der allgemeinen Formel

Hal—B—Hal,

worin

B die Bedeutung von Anspruch 1 hat und

Hal für Halogen steht,

in wäßriger oder organischer Lösung unter Zusatz von säurebindenden Mitteln umsetzt.

7. Verfahren zur Herstellung von polymeren kationischen Hydrazonfarbstoffen des Anspruch 5, dadurch gekennzeichnet, daß man Verbindungen der Formel

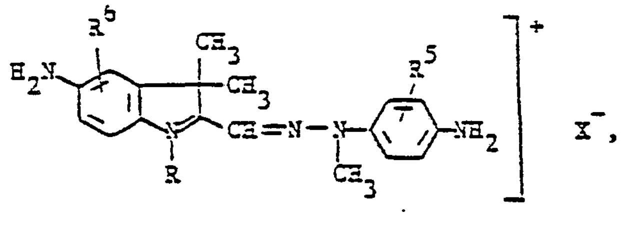

mit Dihalogenverbindungen der Formel

Hal—$B^2$—Hal

worin R, $R^5$, $R^6$, $B^2$ und X die gleichen Bedeutungen wie in Anspruch 5 haben, umsetzt.

8. Verfahren zum Färben von Papier in der Masse und in der Oberfläche, dadurch gekennzeichnet, daß man Farbstoffe der allgemeinen Formel

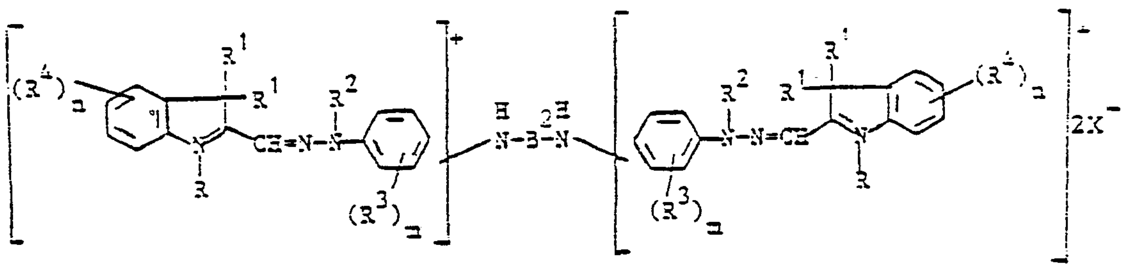

verwendet, worin die Symbole die gleichen Bedeutungen wie in Anspruch 1 haben.

9. Mittel zum Färben von Papier, dadurch gekennzeichnet, daß sie einen kationischen Farbstoff der Formel des Anspruchs 8 enthalten.

## Claims

1. Cationic hydrazone dyestuffs of the general formula

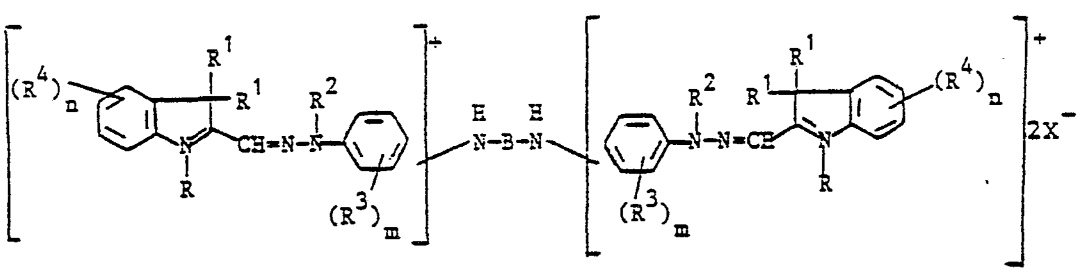

in which

R represents an alkyl radical which has 1 to 4 C atoms and is optionally substituted by hydroxyl, alkoxy having 1 to 4 C atoms, acyloxy, halogen, cyano, carboxyl, $C_1$- to $C_4$-carbalkoxy, carboxamido or acetyl,

$R^1$ represents an alkyl radical which has 1 to 4 C atoms and the two radicals can also form a closed ring,

$R^2$ represents an alkyl radical which has 1 to 4 C atoms and which can be substituted by hydroxyl,

$R^3$ represents an alkyl radical having 1 to 4 C atoms, an alkoxy radical having 1 to 4 C atoms or halogen,

$R^4$ represents an alkyl radical having 1 to 4 C atoms, halogen, alkoxy having 1 to 4 C atoms, phenoxy, benzyloxy, benzyl, carboxyl, an alkyl carboxylate having 1 to 4 C atoms, a carboxamide group which is optionally substituted by 1 or 2 $C_1$- to $C_4$-alkyl radicals, a sulphonamide group which is optionally substituted by 1 or 2 $C_1$- to $C_4$-alkyl radicals, alkylsulphonyl having 1 to 4 C atoms, phenylsulphonyl or a cyano, nitro, trifluoromethyl, acetyl or benzoyl group,

B — if the bridge member —NH—B—NH— is bonded to the benzene ring — represents $B^1$ =

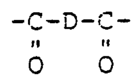,

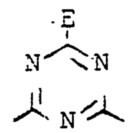

or

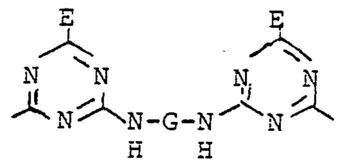

or

— if the bridge member —NH—B—NH— is bonded to the indolenine ring — represents $B^2$ = $B^1$ or CO,

D represents an alkylene radical having 2 to 6 C atoms or a phenylene or a naphthylene radical,

E represents halogen, hydroxyl, alkoxy having 1-4 C atoms or the radical

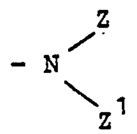

Z and $Z^1$ independently of each other represent hydrogen or the radical

$$—Y—Z^2$$

Y represents alkylene having 1 to 6 C atoms,

$Z^2$ represents hydrogen, hydroxyl, pyridinium or the radicals

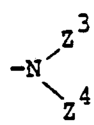

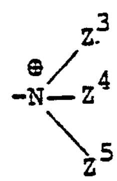 $X^{(-)}$

$Z^3$, $Z^4$ and $Z^5$ independently of one another represent hydrogen or optionally hydroxyl-substituted alkyl having 1 to 4 C atoms,

$Z^3$ also represents phenyl, benzyl or the radical

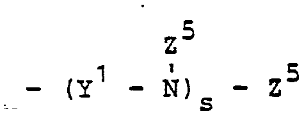

$Y^1$ represents alkylene having 2-4 C atoms and

s represents 1-8,

or

Z and $Z^1$ as well as $Z^3$ and $Z^4$ form closed rings and together with the N atom form a pyrrolidine, morpholine, piperidine or piperazine ring which can be substituted by $C_1$- to $C_4$-alkyl or amino-$C_1$- to $C_4$-alkyl,

G represents an alkylene radical having 2 to 6 C atoms, a phenylene radical or a radical of the formula

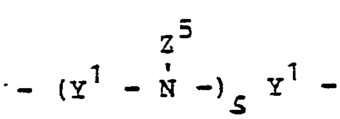

m and n represent 0, 1 or 2 and

$X^{(-)}$ represents an anion.

2. Cationic hydrazone dyestuffs of the general formula

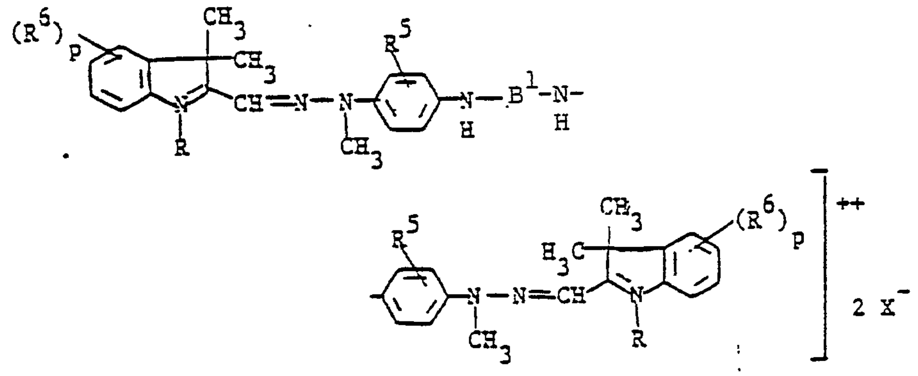

wherein

R, $B^1$ and X have the same meaning as in Claim 1,

$R^5$ represents hydrogen, methyl or chlorine,

$R^6$ represents hydrogen, chlorine, methyl, methoxy or ethoxy, and

p represents 0 or 1.

3. Cationic hydrazone dyestuffs of the general formula

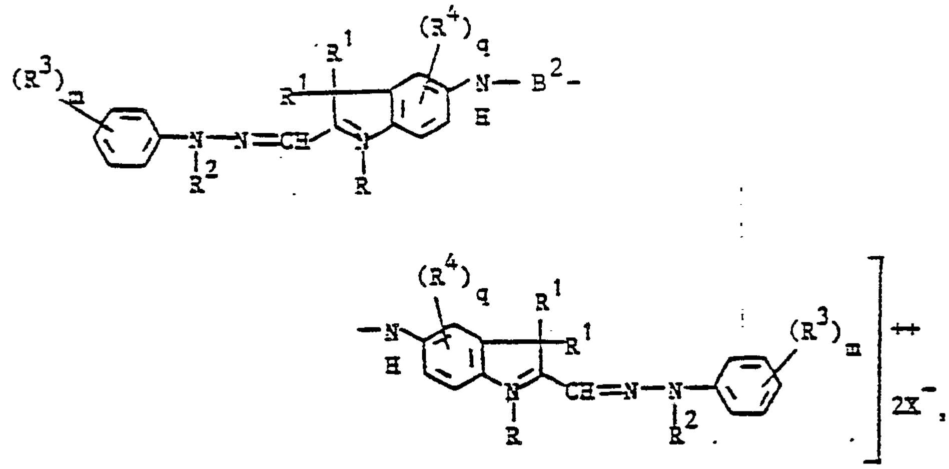

wherein.

R, $R^1$, $R^2$, $R^3$, $R^4$, $B^2$, X and m have the meanings given in Claim 1 and

q represents 0 or 1.

4. Cationic hydrazone dyestuffs of the general formula

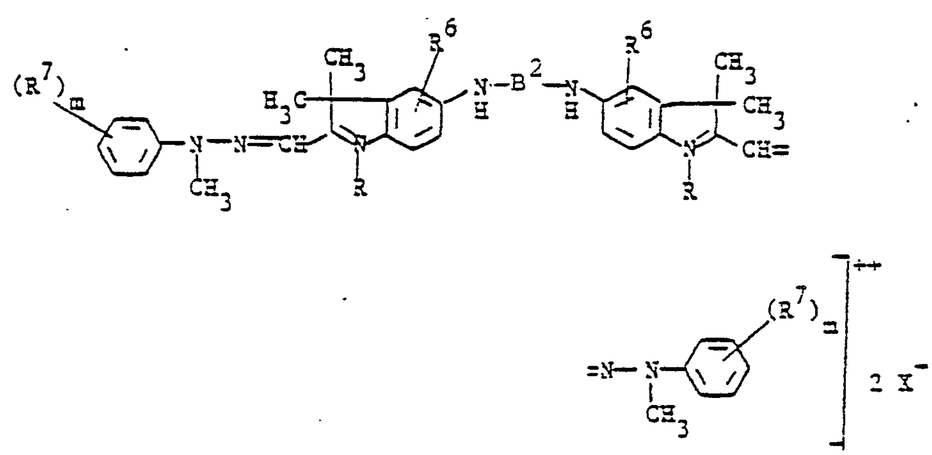

wherein

R, $B^2$, X and m have the meanings of Claim 1,

$R^6$ has the same meaning as in Claim 2, and
$R^7$ represents hydrogen, chlorine, methyl, methoxy or ethoxy.

5. Polymeric cationic hydrazone compounds of the general formula

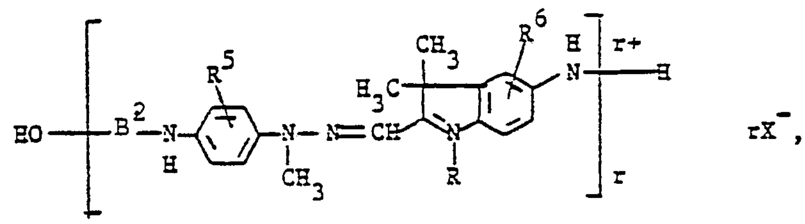

wherein
R, $B^2$ and X have the meanings given in Claim 1,
$R^5$ and $R^6$ have the meanings of Claim 2, and
r represents 2 to 6.

6. Process for preparing cationic hydrazone dyestuffs according to Claim 1, characterised in that hydrazone dyestuffs of the general formula

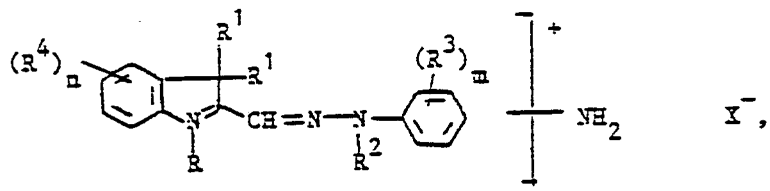

in which R, $R^1$, $R^2$, $R^3$, $R^4$, X, m and n have the same meaning as in Claim 1, are reacted with dihalogeno compounds of the general formula

Hal—B—Hal

wherein
B has the meaning of Claim 1 and
Hal represents halogen,
in an aqueous or organic solution with the addition of acid-binding agents.

7. Process for preparing polymeric cationic hydrazone dyestuffs of Claim 5, characterised in that compounds of the formula

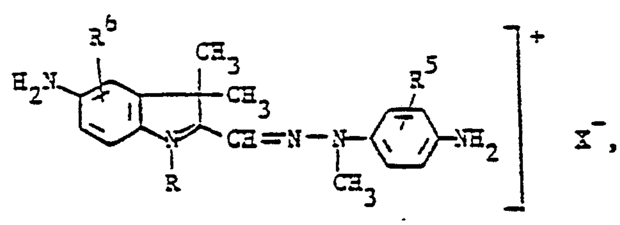

are reacted with dihalogeno compounds of the formula

Hal—$B^2$—Hal

wherein R, $R^5$, $R^6$, $B^2$ and X have the same meanings as in Claim 5.

8. Process for pulp- and surface-dyeing paper, characterised in that dyestuffs of the general formula

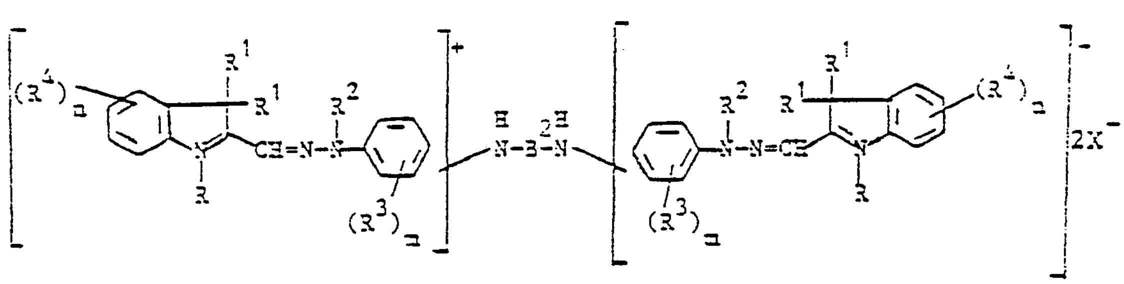

are used in which the symbols have the same meanings as in Claim 1.

9. Agents for dyeing paper, characterised in that they contain a cationic dyestuff of the formula of Claim 8.

## Revendications

1. Colorants hydrazoniques cationiques de formule générale

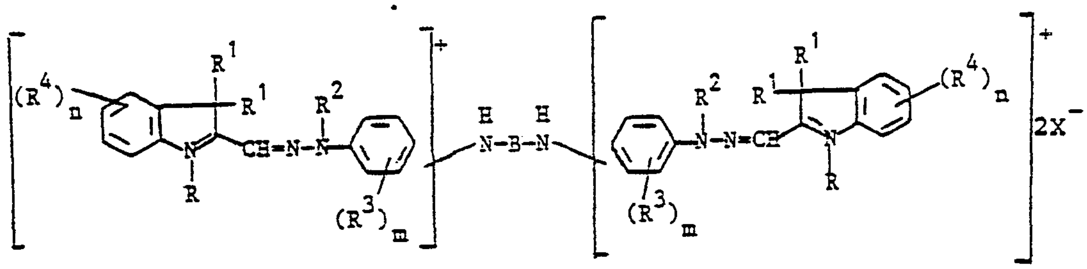

dans laquelle

R représente un reste alkyle ayant 1 à 4 atomes de carbone éventuellement substitué par un substituant hydroxy, alkoxy ayant 1 à 4 atomes de carbone, acyloxy, halogéno, cyano, carboxy, carbalkoxy en $C_1$ à $C_4$, carboxamido ou acétyle,

$R^1$ représente un reste alkyle ayant 1 à 4 atomes de carbone, les deux restes pouvant aussi être cyclisés en un noyau,

$R^2$ est un reste alkyle ayant 1 à 4 atomes de carbone, qui peut être substitué par un groupe hydroxyle,

$R^3$ est un reste alkyle ayant 1 à 4 atomes de carbone, un reste alkoxy ayant 1 à 4 atomes de carbone ou un halogène,

$R^4$ représente un reste alkyle ayant 1 à 4 atomes de carbone, un halogène, un reste alkoxy ayant 1 à 4 atomes de carbone, un reste phénoxy, benzyloxy, benzyle, carboxyle, un reste ester alkylique d'acide carboxylique ayant 1 à 4 atomes de carbone, un groupe carboxamido éventuellement substitué par un ou deux restes alkyle en $C_1$ à $C_4$, un groupe sulfonamido éventuellement substitué par un ou deux restes alkyle en $C_1$ à $C_4$, un groupe alkylsulfonyle ayant 1 à 4 atomes de carbone, phénylsulfonyle, un groupe cyano, nitro, trifluorométhyle, acétyle ou benzoyle, représente — au cas où le groupe de pontage —NH—B—NH— est lié au noyau benzénique — un groupe $B^1$ =

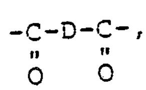,
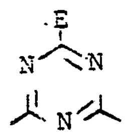

ou

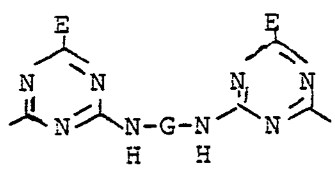

ou

— au cas où le groupe de pontage —NH—B—NH— est lié au noyau d'indolénine — un groupe $B^2$ = $B^1$ ou CO,

D représente un reste alkylène ayant 2 à 6 atomes de carbone, un reste phénylène ou un reste napthylène,

E représente un halogène, un groupe hydroxyle, alkoxy ayant 1 à 4 atomes de carbone ou le reste

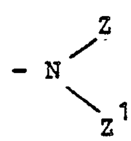

Z et $Z^1$ représentent indépendamment l'un de l'autre de l'hydrogène ou le reste

$$—Y—Z^2$$

Y est un groupe alkylène ayant 1 à 6 atomes de carbone,

$Z^2$ est l'hydrogène, un groupe hydroxyle, un groupe pyridinium ou les restes

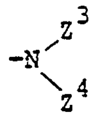

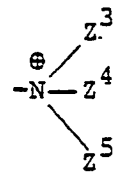

$X^{(-)}$

$Z^3$, $Z^4$ et $Z^5$ représentent indépendamment les uns des autres l'hydrogène ou un groupe alkyle ayant 1 à 4 atomes de carbone éventuellement substitué par un radical hydroxy,

$Z^3$ représente en outre un reste phényle, benzyle ou le reste

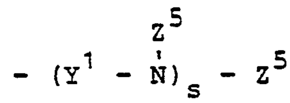

$Y^1$ est un groupe alkylène ayant 2 à 4 atomes de carbone et

s a une valeur de 1 à 8,

ou bien

Z et $Z^1$ ainsi que $Z^3$ et $Z^4$ sont cyclisés et forment avec l'atome d'azote un noyau de pyrrolidine, de morpholine, de pipéridine ou de pipérazine qui peut être substitué par un radical alkyle en $C_1$ à $C_4$ ou amino-(alkyle en $C_1$ à $C_4$),

G représente un reste alkylène ayant 2 à 6 atomes de carbone, un reste phénylène ou un reste de formule

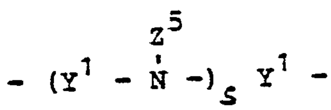

m et n ont la valeur 0, 1 ou 2 et

$X^{(-)}$ représente un anion.

2. Colorants hydrazoniques cationiques de formule générale

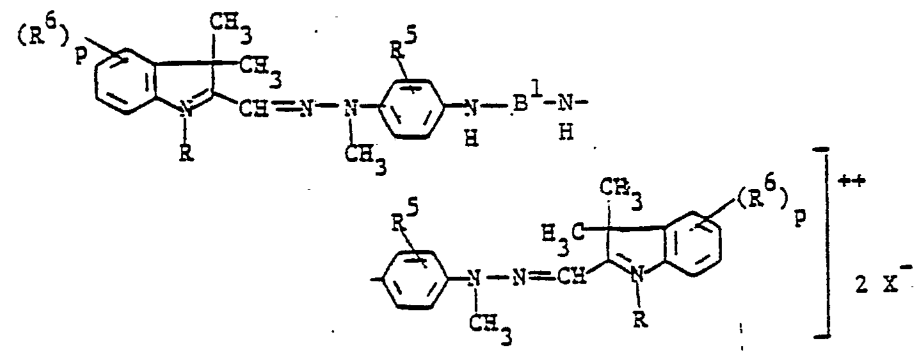

dans laquelle

R, $B^1$ et X ont la même définition que dans la revendication 1,

$R^5$ est l'hydrogène, un groupe méthyle ou le chlore,

$R^6$ est l'hydrogène, le chlore, un groupe méthyle, méthoxy ou éthoxy et

p a la valeur 0 ou 1.

3. Colorants hydrazoniques cationiques de formule générale

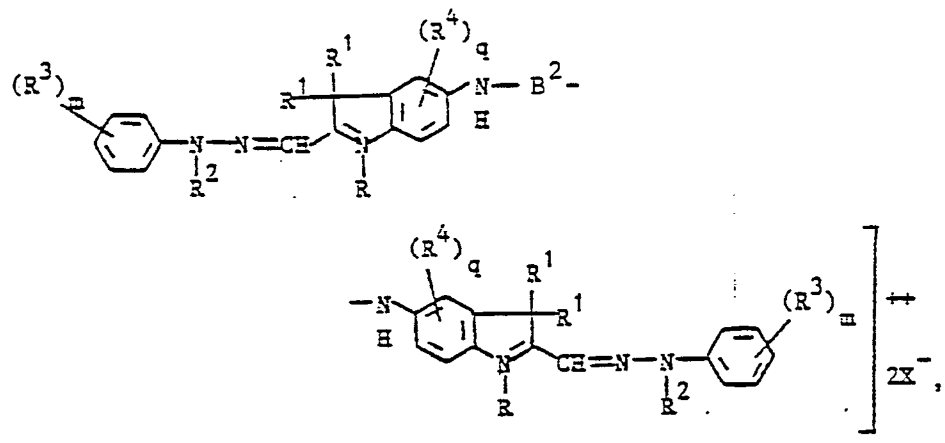

dans laquelle

R, $R^1$, $R^2$, $R^3$, $R^4$, $B^2$, X et m ont les définitions indiquées dans la revendication 1 et

q a la valeur 0 ou 1.

4. Colorants hydrazoniques cationiques de formule générale

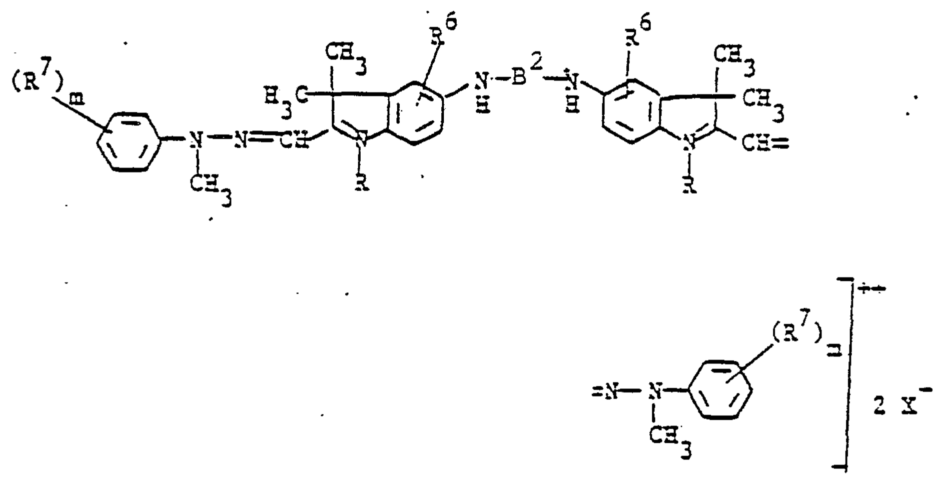

dans laquelle

R, $B^2$, X et m ont les définitions indiquées dans la revendication 1,

$R^6$ a la même définition que dans la revendication 2 et

$R^7$ est l'hydrogène, le chlore, un groupe méthyle, méthoxy ou éthoxy.

5. Composés hydrazoniques polymériques de formule générale

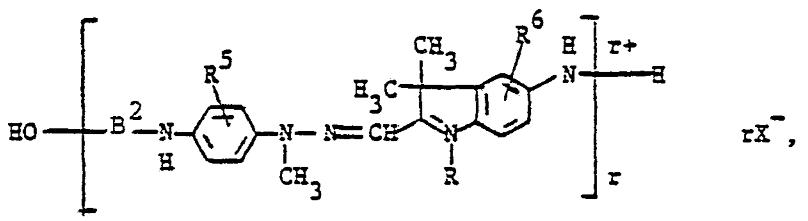

dans laquelle

R, $B^2$ et X ont les définitions indiquées dans la revendication 1,

$R^5$ et $R^6$ ont les définitions indiquées dans la revendication 2 et

r a une valeur de 2 à 6.

6. Procédé de production de colorants hydrazoniques cationiques suivant la revendication 1, caractérisé en ce qu'on fait réagir en solution aqueuse ou organique avec addition d'accepteurs d'acides, des colorants hydrazoniques de formule générale

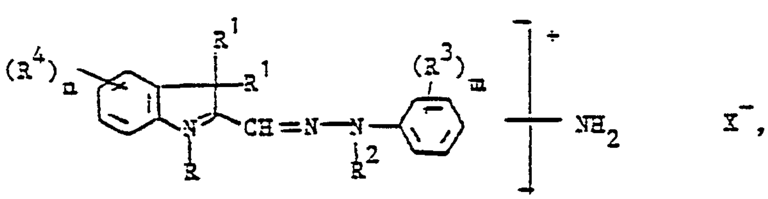

dans laquelle R, $R^1$, $R^2$, $R^3$, $R^4$, X, m et n ont la même définition que dans la revendication 1, avec des composés dihalogénés de formule générale

Hal—B—Hal,

dans laquelle

B a la définition indiquée dans la revendication 1 et

Hal est un halogène.

7. Procédé de production de colorants hydrazoniques cationiques polymériques suivant la revendication 5, caractérisé en ce qu'on fait réagir des composés de formule

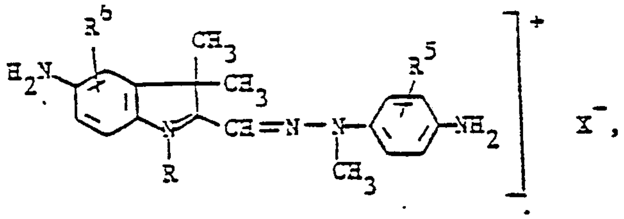

avec des composés dihalogénés de formule

Hal—$B^2$—Hal

dans laquelle R, $R^5$, $R^6$, $B^2$ et X ont les mêmes définitions que dans la revendication 5.

8. Procédé pour colorer le papier dans la masse et en surface, caractérisé en ce qu'on utilise des colorants de formule générale

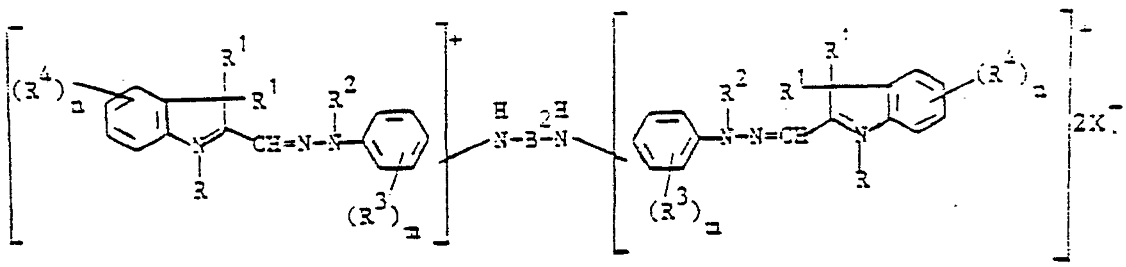

les symboles ayant les mêmes définitions que dans la revendication 1.

9. Composition pour la coloration du papier, caractérisée en ce qu'elle contient un colorant cationique de la formule suivant la revendication 8.